# EUROPEAN PATENT APPLICATION

(11) **EP 1 074 909 A2**
(43) Date of publication of application: **07.02.2001**
(21) Application number: 00305627.2
(22) Date of filing: 04.07.2000
(51) Int. Cl.: G06F 9/06

(54) **Information processing apparatus and method**

(30) Priority: 05.07.1999 JP 19023899
(71) Applicant: SONY CORPORATION, Tokyo 141 (JP)
(72) Inventor: Sato, Makoto, Sony Corporation, Tokyo 141 (JP); Sato, Naoyuki, Sony Corporation, Tokyo 141 (JP)
(74) Representative: DeVile, Jonathan Mark

(57) **Abstract**

The invention provides an information processing apparatus and method as well as a medium by which resources of a bus can be utilized efficiently without increase in cost. When a command NOTIFY is transmitted to a target, if a queue of the target has some free storage area, then the node ID of a controller from which the command has been transmitted is stored into the queue. When the same command NOTIFY is transmitted from the controller to the target before a fixed time elapses after the command is received, then the target restarts its timer operation. If the timer otherwise counts up a time determined in advance, then the target sends back a response REJECTED to the controller.

## Description

The present invention relates to an information processing apparatus and method.

In recent years, the IEEE (Institute of Electrical and Electronics Engineers) 1394 high speed serial bus (hereinafter referred to simply as IEEE 1394 bus) has been and is being popularized. The IEEE 1394 bus allows each of apparatus (nodes) connected thereto to serve as a controller which controls another one (target) of the apparatus making use of an AV/C command.

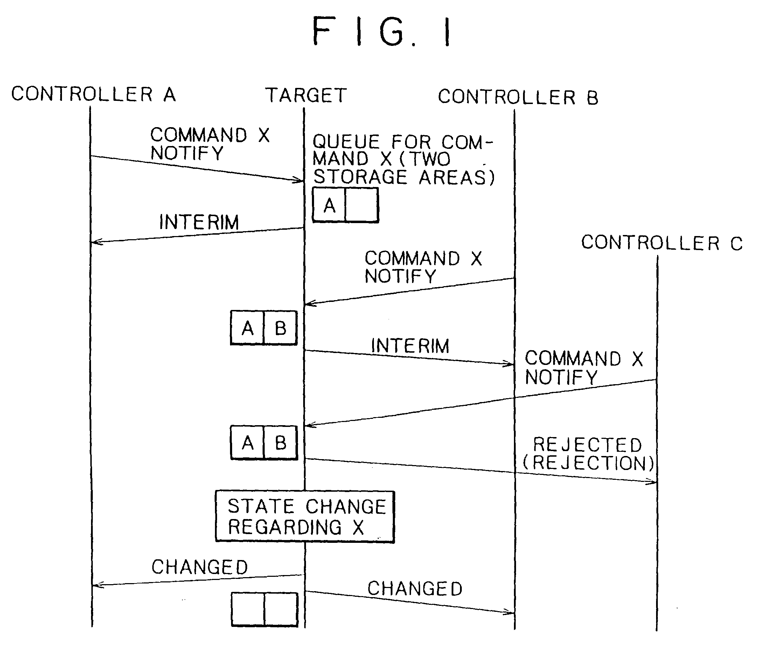

FIG. 1 illustrates an example of operation where three controllers A to C and a target are connected to the same IEEE 1394 bus. Referring to FIG. 1, when the controller A wants to receive a notification when a change in state occurs with the target, it outputs a command NOTIFY to the target over the IEEE 1394 bus. The target has a queue having, for each command, storage areas for storing information corresponding to the command. In the example shown in FIG. 1, the target has a queue having two storage areas regarding the command NOTIFY as a command X. Thus, when the command NOTIFY is received from the controller A, the target stores a node ID of the controller A into one of the storage areas of the queue for the command X in order to store the fact that the command NOTIFY has been received from the controller A. In the example described, "A" is stored as the node ID.

In order to notify the controller A that the command has been received, the target transmits a response INTERIM to the controller A over the IEEE 1394 bus.

Further, if the controller B transfers the command NOTIFY to the target, then the target stores an ID of the controller B into the queue and outputs the response INTERIM to the controller B.

Thereafter, if the controller C further transfers the command NOTIFY to the target, then since the target has a queue of only two storage areas regarding the command X (command NOTIFY) and the IDs of the two controllers (controller A and controller B) are stored already in the two storage areas of the queue, the target cannot store the ID of any further controller. Therefore, the target outputs to the controller C a response REJECTED representing that the target cannot handle the command NOTIFY.

When the state designated by the command X changes, the target outputs a response CHANGED representing that the state has changed to the controller or controllers stored in the queue. After the response CHANGED is outputted, the queue of the target is cleared.

In this manner, the conventional system described above has a subject to be solved in that, since the number of storage areas of the queue which the target has is limited, an excessive number of commands are rejected. If the number of storage areas of the queue is increased, then a greater number of commands can be processed. However, this requires a greater storage capacity as much and gives rise to an increase in cost.

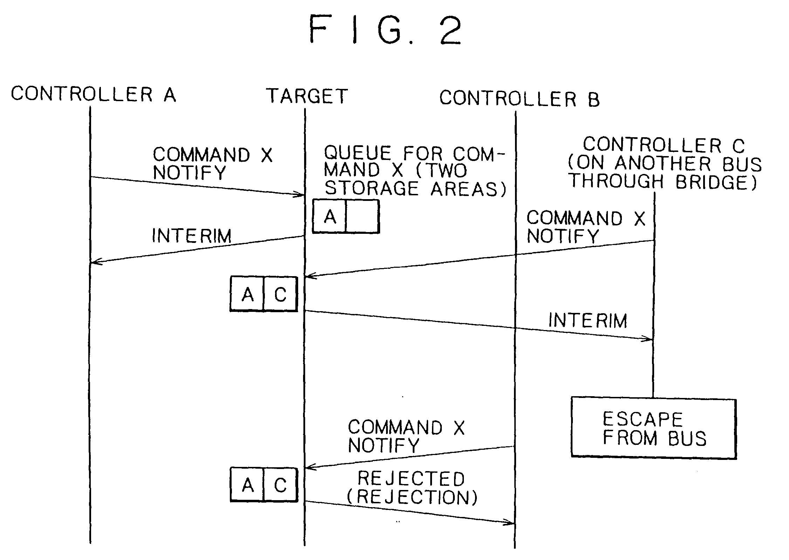

Further, where, for example, as shown in FIG. 2, controllers A and B and a target are connected to the same bus while a further controller C is connected to another bus through a bridge, if the controller C connected to the bus different from the bus to which the target is connected escapes (is disconnected) from the bus while the command NOTIFY is outputted from each of the controller A and the controller C to the target and two such commands NOTIFY are registered in the queue of the target, then bus resetting occurs with the bus to which the controller C is connected. However, this bus resetting is not conveyed to the target connected to the bus different from the bus to which the controller C is connected. As a result, the target remains storing the two IDs of the controller A and the controller C in the queue thereof. Then, if the controller B connected to the same bus to which the target is connected outputs the command NOTIFY to the target, since the two IDs are stored already in the queue of the target, the target outputs the response REJECTED in response to the command from the controller B.

Since the controller C has already escaped from the bus, although the controller B should originally be able to control the target, because the escapement of the controller C from the bus has not been conveyed to the bus side to which the target is connected, the resource is not utilized effectively on the bus side to which the target is connected.

The assignee of the present application has proposed, for example, in Japanese Patent Laid-Open No. Hei 9-326812, a system wherein, when it becomes unnecessary for a controller to receive a notification of a change of a state from a target after the controller outputs the command NOTIFY, the controller transmits the command NOTIFY (CANCEL) to cancel the command NOTIFY having been outputted once to the target. When the target receives the command NOTIFY (CANCEL), it erases information of a corresponding storage area of its queue. Consequently, the resource can thereafter be utilized efficiently.

However, although, in such a case that the user intentionally removes the controller C from the bus, the controller C can transmit such a command NOTIFY (CANCEL) as mentioned above, if the controller C is removed from the bus by such an accident that a cable is disconnected inadvertently, the controller C cannot transmit the command NOTIFY (CANCEL) to the target in advance. As a result, the ID of the controller C remains as it is in the queue of the target.

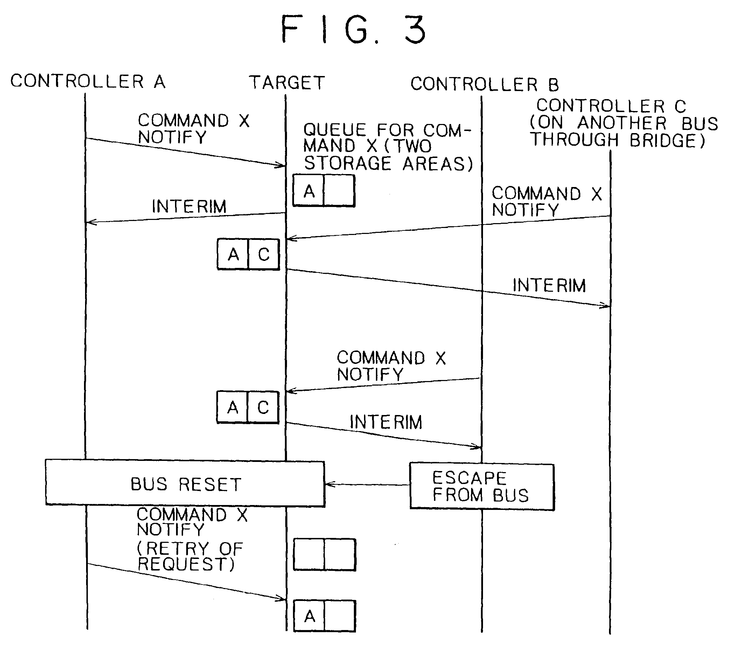

Further, if, as shown in FIG. 3, a controller B connected to a bus to which a target is connected escapes from the bus while a controller A connected to the bus to which the target is connected and a controller C connected to another bus different from the but to which the target is connected are both registered in the queue of the target, then bus resetting occurs with the bus to which the target is connected. Thereupon, the target erases IDs stored in the queue thereof.

Since the controller A connected to the bus to which the target is connected can detect bus resetting, when the bus resetting occurs, the controller A transmits the command NOTIFY again to the target so that, when a change of the state occurs with the target later, the controller A can receive a notification of the change.

On the other hand, since the controller C is connected to the bus different from the bus to which the target is connected, it cannot detect the bus resetting of the bus to which the target is connected and cannot detect that information of the controller C itself in the queue of the target has been erased as a result of the bus resetting. As a result, the controller C will wait for ever for reception of a notification of a state change from the target which is not actually be sent from the target at all.

Various aspects and features of the present invention are defined in the appended claims.

Combinations of features from the dependent claims may be combined with features of the independent claims as appropriate and not merely as explicitly set out in the claims.

According to an aspect of the present invention, there is provided an information processing apparatus which communicates information over a bus, comprising storage means for storing, when a command regarding a state of the information processing apparatus from a second information processing apparatus connected to the information processing apparatus by the bus is accepted, information regarding the command, detection means for detecting a state of the information processing apparatus, outputting means for outputting, when the information regarding the command is stored in the storage means, a response corresponding to a result of the detection of the detection means, time counting means for performing a time counting operation when the information regarding the command is stored in the storage means, and erasure means for erasing the information regarding the command stored in the storage means when the time counting means counts a time determined in advance.

Embodiments of the present invention relate to an information processing apparatus and method as well as a medium, and more particularly to an information processing apparatus and method as well as a medium by which information can be transmitted and received efficiently over a bus.

Embodiments of the present invention can provide an information processing apparatus and method as well as a medium by which resources of a bus can be utilized efficiently without increase in cost.

The information processing apparatus may be constructed such that the detection means detects a change of the state of the information processing apparatus, and the outputting means outputs, when a change of the state is detected by the detection means, a response corresponding to the change of the state.

The detection means may detect whether or not the information processing apparatus is in a state reserved by the second information processing apparatus.

The storage means may store identification information of the second information processing apparatus from which the command regarding the state has been transmitted over the bus.

The storage means may store it itself that the command regarding the state is accepted. In this instance, the outputting means may output a response corresponding to a result of the detection of the detection means without specifying the second information processing apparatus from which the command regarding the state has been transmitted.

The information processing apparatus may further comprise control means for controlling a kind of the command regarding the state to be stored into the storage means in response to a result of the detection of the detection means.

According to another aspect of the present invention, there is provided an information processing method for an information processing apparatus which communicates information over a bus, comprising a storage step of storing, when a command regarding a state of the information processing apparatus from a second information processing apparatus connected to the information processing apparatus by the bus is accepted by the information processing apparatus, information regarding the command, a detection step of detecting a state of the information processing apparatus, an outputting step of outputting, when the information regarding the command is stored, a response corresponding to a result of the detection by the processing of the detection step, a time counting step of performing a time counting operation when the information regarding the command is stored, and an erasure step of erasing the information regarding the command stored by the processing of the storage step when a time determined in advance is counted by the processing of the time counting step.

According to a further aspect of the present invention, there is provided a medium for causing a computer to execute a program for information processing of an information processing apparatus which communicates information over a bus, the program including a storage step of storing, when a command regarding a state of the information processing apparatus from a second information processing apparatus connected to the information processing apparatus by the bus is accepted by the information processing apparatus, information regarding the command, a detection step of detecting a state of the information processing apparatus, an outputting step of outputting, when the information regarding the command is stored, a response corresponding to a result of the detection by the processing of the detection step, a time counting step of performing a time counting operation when the information regarding the command is stored, and an erasure step of erasing the information regarding the command stored by the processing of the storage step when a time determined in advance is counted by the processing of the time counting step.

With the information processing apparatus and the information processing method as well as the medium, where information regarding a command is stored, when the time determined in advance is counted, the information regarding the command is erased. Consequently, the information processing apparatus connected to the bus can be utilized efficiently.

According to a still further aspect of the present invention, there is provided an information processing apparatus which communicates information over a bus, comprising outputting means for outputting a command regarding a state of a second information processing apparatus connected to the information processing apparatus by the bus, fetching means for fetching a response outputted from the second information processing apparatus in response to the command outputted from the outputting means, time counting means for performing a time counting operation when the outputting means outputs the command, and control means for controlling, when the time counting means counts a time determined in advance, the outputting means to output the command again.

Preferably, the time to be counted by the time counting means is shorter than a time for which the second information apparatus holds, when the second information apparatus accepts the command, the information regarding the command.

The information processing apparatus may further comprise designation means for designating, as a format of a response to be outputted from the second information processing apparatus, a format in which no information processing apparatus is specified as a destination of the response.

Alternatively, the information processing apparatus may further comprise designation means for designating, as a format of a response to be outputted from the second information processing apparatus, one of a first format in which an information processing apparatus is specified as a destination of the response and a second format in which no information processing apparatus is specified as a destination of the response. In this instance, the time counting means may perform the time counting operation only when a predetermined one of the first and second formats is designated by the designation means.

According to a yet further aspect of the present invention, there is provided an information processing method for an information processing apparatus which communicates information over a bus, comprising an outputting step of outputting a command regarding a state of a second information processing apparatus connected to the information processing apparatus by the bus, a fetching step of fetching a response outputted from the second information processing apparatus in response to the command outputted by the processing of the outputting step, a time counting step of performing a time counting operation when the command is outputted by the processing of the outputting step, and a control step of controlling, when a time determined in advance is counted by the processing of the time counting step, the processing in the outputting step to output the command again.

According to a yet further aspect of the present invention, there is provided a medium for causing a computer to execute a program for information processing of an information processing apparatus which communicates information over a bus, the program including an outputting step of outputting a command regarding a state of a second information processing apparatus connected to the information processing apparatus by the bus, a fetching step of fetching a response outputted from the second information processing apparatus in response to the command outputted by the processing of the outputting step, a time counting step of performing a time counting operation when the command is outputted by the processing of the outputting step, and a control step of controlling, when a time determined in advance is counted by the processing of the time counting step, the processing in the outputting step to output the command again.

With the information processing apparatus and the information processing method as well as the medium, where a command is outputted, when the time set in advance is counted, the command is outputted again. Consequently, it is possible to cause the second information processing apparatus, which has outputted a command once, to execute processing corresponding to the command with certainty.

According to a yet further aspect of the present invention, there is provided an information processing apparatus which communicates information over a bus, comprising first outputting means for outputting a command regarding a state of a second information processing apparatus connected to the information processing apparatus by the bus, fetching means for fetching a response outputted from the second information processing apparatus in response to the command outputted from the first outputting means, first time counting means for performing a time counting operation when the first outputting means outputs the command, control means for controlling, when the first time counting means counts a time determined in advance, the first outputting means to output the command again, storage means for storing, when a command regarding a state of the information processing apparatus from the second information processing apparatus is accepted, information regarding the command, detection means for detecting a state of the information processing apparatus, second outputting means for outputting, when the information regarding the command is stored in the storage means, a response corresponding to a result of the detection of the detection means, second time counting means for performing a time counting operation when the information regarding the command is stored in the storage means, and erasure means for erasing the information regarding the command stored in the storage means when the second time counting means counts a time determined in advance.

The information processing apparatus may further comprise control means for controlling a kind of the command regarding the state to be stored into the storage means in response to a result of the detection of the detection means.

According to a yet further aspect of the present invention, there is provided an information processing method for an information processing apparatus which communicates information over a bus, comprising a first outputting step of outputting a command regarding a state of a second information processing apparatus connected to the information processing apparatus by the bus, a fetching step of fetching a response outputted from the second information processing apparatus in response to the command outputted by the processing of the first outputting step, a first time counting step of performing a time counting operation when the command is outputted by the processing of the first outputting step, a control step of controlling, when a time determined in advance is counted by the processing of the first time counting step, the processing of the first outputting step to output the command again, a storage step of storing, when a command regarding a state of the information processing apparatus from the second information processing apparatus is accepted, information regarding the command, a detection step of detecting a state of the information processing apparatus, a second outputting step of outputting, when the information regarding the command is stored, a response corresponding to a result of the detection by the detection step, a second time counting step of performing a time counting operation when the information regarding the command is stored, and an erasure step of erasing the information regarding the command stored by the processing of the storage step when the second time counting step counts a time determined in advance.

According to a yet further aspect of the present invention, there is provided a medium for causing a computer to execute a program for information processing of an information processing apparatus which communicates information over a bus, the program including a first outputting step of outputting a command regarding a state of a second information processing apparatus connected to the information processing apparatus by the bus, a fetching step of fetching a response outputted from the second information processing apparatus in response to the command outputted by the processing of the first outputting step, a first time counting step of performing a time counting operation when the command is outputted by the processing of the first outputting step, a control step of controlling, when a time determined in advance is counted by the processing of the first time counting step, the processing of the first outputting step to output the command again, a storage step of storing, when a command regarding a state of the information processing apparatus from the second information processing apparatus is accepted, information regarding the command, a detection step of detecting a state of the information processing apparatus, a second outputting step of outputting, when the information regarding the command is stored, a response corresponding to a result of the detection by the detection step, a second time counting step of performing a time counting operation when the information regarding the command is stored, and an erasure step of erasing the information regarding the command stored by the processing of the storage step when the second time counting step counts a time determined in advance.

With the information processing apparatus and the information processing method as well as the medium, where a command is outputted, when the time set in advance is counted, the command is outputted again. Further, where information regarding a command is stored, when the time determined in advance is counted, the information regarding the command is erased. Consequently, the information processing apparatus does not occupy the second information processing apparatus in vain, and can receive a response corresponding to the command with certainty from the second information processing apparatus.

According to a yet further aspect of the present invention, there is provided an information processing apparatus which communicates information over a bus, comprising outputting means for outputting a command regarding a state of a second information processing apparatus connected to the information processing apparatus by the bus, designation means for designating, as a format of a response to be outputted from the second information processing apparatus, a format in which no information processing apparatus is specified as a destination of the response in response to the command outputted from the outputting means, and fetching means for fetching a response outputted from the second information processing apparatus.

The designation means may selectively designate, as a format of a response to be outputted from the second information processing apparatus, one of a first format in which an information processing apparatus is specified as a destination of the response and a second format in which no information processing apparatus is specified as a destination of the response.

According to a yet further aspect of the present invention, there is provided an information processing method for an information processing apparatus which communicates information over a bus, comprising an outputting step of outputting a command regarding a state of a second information processing apparatus connected to the information processing apparatus by the bus, a designation step of designating, as a format of a response to be outputted from the second information processing apparatus, a format in which no information processing apparatus is specified as a destination of the response in response to the command outputted by the processing of the outputting step, and a fetching step of fetching a response outputted from the second information processing apparatus.

According to a yet further aspect of the present invention, there is provided a medium for causing a computer to execute a program for information processing of an information processing apparatus which communicates information over a bus, the program including an outputting step of outputting a command regarding a state of a second information processing apparatus connected to the information processing apparatus by the bus, a designation step of designating, as a format of a response to be outputted from the second information processing apparatus, a format in which no information processing apparatus is specified as a destination of the response in response to the command outputted by the processing of the outputting step, and a fetching step of fetching a response outputted from the second information processing apparatus.

With the invention processing apparatus and the information processing method as well as the medium, as a format of a response to be outputted from the second information processing apparatus, the format in which no information processing apparatus is specified as a destination of the response is designated. Consequently, the information processing apparatus can receive a response with certainty from a predetermined information processing apparatus.

According to a yet further aspect of the present invention, there is provided an information processing apparatus which communicates information over a bus, comprising storage means for storing, when a command regarding a state of the information processing apparatus from a second information processing apparatus connected to the information processing apparatus by the bus is accepted, information regarding the command, detection means for detecting a state of the information processing apparatus, outputting means for outputting, when the information regarding the command is stored in the storage means, a response corresponding to a result of the detection of the detection means, and designation means for designating, as a format of a response to be outputted from the outputting means, a format in which no information processing apparatus is specified as a destination of the response.

The designation means may selectively designate, as the format of the response to be outputted from the outputting means, one of a first format in which an information processing apparatus is designated as a destination of the response and a second format in which no information processing apparatus is designated as a destination of the response.

The information processing apparatus may be constructed such that the detection means detects a change of the state of the information processing apparatus, and the outputting means outputs, when a change of the state is detected by the detection means, a response corresponding to the change of the state.

The detection means may detect whether or not the information processing apparatus is in a state reserved by the second information processing apparatus.

According to a yet further aspect of the present invention, there is provided an information processing method for an information processing apparatus which communicates information over a bus, comprising a storage step of storing, when a command regarding a state of the information processing apparatus from a second information processing apparatus connected to the information processing apparatus by the bus is accepted, information regarding the command, a detection step of detecting a state of the information processing apparatus, an outputting step of outputting, when the information regarding the command is stored, a response corresponding to a result of the detection by the processing of the detection step, and a designation step of designating, as a format of a response to be outputted by the processing of the outputting step, a format in which no information processing apparatus is specified as a destination of the response.

According to a yet further aspect of the present invention, there is provided a medium for causing a computer to execute a program for information processing of an information processing apparatus which communicates information over a bus, the program including a storage step of storing, when a command regarding a state of the information processing apparatus from a second information processing apparatus connected to the information processing apparatus by the bus is accepted, information regarding the command, a detection step of detecting a state of the information processing apparatus, an outputting step of outputting, when the information regarding the command is stored, a response corresponding to a result of the detection by the processing of the detection step, and a designation step of designating, as a format of a response to be outputted by the processing of the outputting step, a format in which no information processing apparatus is specified as a destination of the response.

With the information processing apparatus and the information processing method and the medium, as a format of a response to be outputted, the format in which no information processing apparatus is specified as a destination of the response is designated. Consequently, the information processing apparatus can send back the response with certainty to a number of information processing apparatus including the second information processing apparatus.

According to a yet further aspect of the present invention, there is provided an information processing apparatus which communicates information over a bus, comprising first outputting means for outputting a command regarding a state of a second information processing apparatus connected to the information processing apparatus by the bus, first designation means for designating, as a format of a response to be outputted from the second information processing apparatus, a format in which no information processing apparatus is specified as a destination of the response in response to the command outputted from the first outputting means, fetching means for fetching a response outputted from the second information processing apparatus, storage means for storing, when a command regarding a state of the information processing apparatus from a second information processing apparatus connected to the information processing apparatus by the bus is accepted, information regarding the command, detection means for detecting a state of the information processing apparatus, second outputting means for outputting, when the information regarding the command is stored in the storage means, a response corresponding to a result of the detection of the detection means, and second designation means for designating, as a format of a response to be outputted from the second outputting means, a format in which no information processing apparatus is specified as a destination of the response.

The information processing apparatus may further comprise control means for controlling a kind of the command regarding the state to be stored into the storage means in response to a result of the detection of the detection means.

According to a yet further aspect of the present invention, there is provided an information processing method for an information processing apparatus which communicates information over a bus, comprising a first outputting step of outputting a command regarding a state of a second information processing apparatus connected to the information processing apparatus by the bus, a first designation step of designating, as a format of a response to be outputted from the second information processing apparatus, a format in which no information processing apparatus is specified as a destination of the response in response to the command outputted by the processing of the first outputting step, a fetching step of fetching a response outputted from the second information processing apparatus, a storage step of storing, when a command regarding a state of the information processing apparatus from the second information processing apparatus is accepted, information regarding the command, a detection step of detecting a state of the information processing apparatus, a second outputting step of outputting, when the information regarding the command is stored, a response corresponding to a result of the detection of the detection step, and a second designation step of designating, as a format of a response to be outputted by the processing of the second outputting step, a format in which no information processing apparatus is specified as a destination of the response.

According to a yet further aspect of the present invention, there is provided a medium for causing a computer to execute a program for information processing of an information processing apparatus which communicates information over a bus, the program including a first outputting step of outputting a command regarding a state of a second information processing apparatus connected to the information processing apparatus by the bus, a first designation step of designating, as a format of a response to be outputted from the second information processing apparatus, a format in which no information processing apparatus is specified as a destination of the response in response to the command outputted by the processing of the first outputting step, a fetching step of fetching a response outputted from the second information processing apparatus, a storage step of storing, when a command regarding a state of the information processing apparatus from the second information processing apparatus is accepted, information regarding the command, a detection step of detecting a state of the information processing apparatus, a second outputting step of outputting, when the information regarding the command is stored, a response corresponding to a result of the detection of the detection step, and a second designation step of designating, as a format of a response to be outputted by the processing of the second outputting step, a format in which no information processing apparatus is specified as a destination of the response.

With the information processing apparatus and the information processing method as well as the medium, as a format of a response to be outputted from the second information processing apparatus, the format in which no information processing apparatus is specified as a destination of the response is designated in response to a command outputted, and as a format of a response, the format in which no information processing apparatus is specified as a destination of the response is designated. Consequently, the information processing apparatus can accept commands from a large number of information processing apparatus and can send back corresponding responses with certainty to them.

According to a yet further aspect of the present invention, there is provided an information processing apparatus which communicates information over a bus, comprising first outputting means for outputting a command regarding a state of a second information processing apparatus connected to the information processing apparatus by the bus, fetching means for fetching a response outputted from the second information processing apparatus in response to the command outputted from the first outputting means, first time counting means for performing a time counting operation when the first outputting means outputs the command, first control means for controlling, when the first time counting means counts a time determined in advance, the first outputting means to output the command again, storage means for storing, when a command regarding a state of the information processing apparatus from the second information processing apparatus is accepted, information regarding the command, detection means for detecting a state of the information processing apparatus, second outputting means for outputting, when the information regarding the command is stored in the storage means, a response corresponding to a result of the detection of the detection means, second time counting means for performing a time counting operation when the information regarding the command is stored in the storage means, erasure means for erasing the information regarding the command stored in the storage means when the second time counting means counts a time determined in advance, first designation means for designating, as a format of a response to be outputted from the second information processing apparatus, a format in which no information processing apparatus is specified as a destination of the response in response to the command outputted from the first outputting means, and second designation means for designating, as a format of a response to be outputted from the second outputting means, a format in which no information processing apparatus is specified as a destination of the response.

The information processing apparatus may further comprise second control means for controlling a kind of the command regarding the state to be stored into the storage means in response to a result of the detection of the detection means.

According to a yet further aspect of the present invention, there is provided an information processing method for an information processing apparatus which communicates information over a bus, comprising a first outputting step of outputting a command regarding a state of a second information processing apparatus connected to the information processing apparatus by the bus, a fetching step of fetching a response outputted from the second information processing apparatus in response to the command outputted by the processing of the first outputting step, a first time counting step of performing a time counting operation when the command is outputted by the processing of the first outputting step, a control step of controlling, when a time determined in advance is counted by the processing of the first time counting step, the processing of the first outputting step to output the command again, a storage step of storing, when a command regarding a state of the information processing apparatus from the second information processing apparatus is accepted, information regarding the command, a detection step of detecting a state of the information processing apparatus, a second outputting step of outputting, when the information regarding the command is stored, a response corresponding to a result of the detection by the processing of the detection step, a second time counting step of performing a time counting operation when the information regarding the command is stored, an erasure step of erasing the information regarding the command stored by the processing of the storage step when a time determined in advance is counted by the processing of the second time counting step, a first designation step of designating, as a format of a response to be outputted from the second information processing apparatus, a format in which no information processing apparatus is specified as a destination of the response in response to the command outputted by the processing of the first outputting step, and a second designation step of designating, as a format of a response to be outputted by the processing of the second outputting step, a format in which no information processing apparatus is specified as a destination of the response.

According to a yet further aspect of the present invention, there is provided a medium for causing a computer to execute a program for information processing of an information processing apparatus which communicates information over a bus, the program including a first outputting step of outputting a command regarding a state of a second information processing apparatus connected to the information processing apparatus by the bus, a fetching step of fetching a response outputted from the second information processing apparatus in response to the command outputted by the processing of the first outputting step, a first time counting step of performing a time counting operation when the command is outputted by the processing of the first outputting step, a control step of controlling, when a time determined in advance is counted by the processing of the first time counting step, the processing of the first outputting step to output the command again, a storage step of storing, when a command regarding a state of the information processing apparatus from the second information processing apparatus is accepted, information regarding the command, a detection step of detecting a state of the information processing apparatus, a second outputting step of outputting, when the information regarding the command is stored, a response corresponding to a result of the detection by the processing of the detection step, a second time counting step of performing a time counting operation when the information regarding the command is stored, an erasure step of erasing the information regarding the command stored by the processing of the storage step when a time determined in advance is counted by the processing of the second time counting step, a first designation step of designating, as a format of a response to be outputted from the second information processing apparatus, a format in which no information processing apparatus is specified as a destination of the response in response to the command outputted by the processing of the first outputting step, and a second designation step of designating, as a format of a response to be outputted by the processing of the second outputting step, a format in which no information processing apparatus is specified as a destination of the response.

With the information processing apparatus and the information processing method as well as the medium, where a command is outputted, when the time set in advance is counted, the command is outputted again, and where information regarding a command is stored, when the time determined in advance is counted, the information regarding the command is erased. Further, as a format of a response to be outputted from the second information processing apparatus, the format in which no information processing apparatus is specified as a destination of the response is designated, and as a format of a response to be outputted from the information processing apparatus itself, the format in which no information processing apparatus is specified as a destination of the response is designated. Consequently, the information processing apparatus can utilize resources efficiently.

According to a yet further aspect of the present invention, there is provided an information processing apparatus which communicates information over a bus, comprising storage means for storing, when a command regarding a state of the information processing apparatus from a second information processing apparatus connected to the information processing apparatus by the bus is accepted, information regarding the command, detection means for detecting a state of the information processing apparatus, outputting means for outputting, when the information regarding the command is stored in the storage means, a response corresponding to a result of the detection of the detection means, and control means for controlling a kind of the command regarding the state to be stored into the storage means in response to a result of the detection of the detection means.

According to a yet further aspect of the present invention, there is provided an information processing method for an information processing apparatus which communicates information over a bus, comprising a storage step of storing, when a command regarding a state of the information processing apparatus from a second information processing apparatus connected to the information processing apparatus by the bus is accepted, information regarding the command, a detection step of detecting a state of the information processing apparatus, an outputting step of outputting, when the information regarding the command is stored, a response corresponding to a result of the detection by the processing of the detection step, and a control step of controlling a kind of the command regarding the state to be stored by the processing of the storage step in response to a result of the detection by the processing of the detection step.

According to a yet further aspect of the present invention, there is provided a medium for causing a computer to execute a program for information processing of an information processing apparatus which communicates information over a bus, the program including a storage step of storing, when a command regarding a state of the information processing apparatus from a second information processing apparatus connected to the information processing apparatus by the bus is accepted, information regarding the command, a detection step of detecting a state of the information processing apparatus, an outputting step of outputting, when the information regarding the command is stored, a response corresponding to a result of the detection by the processing of the detection step, and a control step of controlling a kind of the command regarding the state to be stored by the processing of the storage step in response to a result of the detection by the processing of the detection step.

With the information processing apparatus and the information processing method as well as the medium, a kind of a command regarding a state to be stored is controlled in response to a result of detection of the state. Consequently, a comparatively large number of commands can be managed with a comparatively small storage capacity.

The invention will now be described by way of example with reference to the accompanying drawings, throughout which like parts are referred to by like references, and in which:
FIGS. 1 to 3 are flowcharts illustrating different operations of a conventional bus system;
FIG. 4 is a block diagram showing an example of a construction of a bus system to which the present invention is applied;
FIG. 5 is a block diagram showing an example of a construction of a video tape recorder;
FIG. 6 is a diagrammatic view showing a structure of an asynchronous packet;
FIG. 7 is a view illustrating a command and a response;
FIG. 8 is a diagrammatic view showing a GASP format;
FIG. 9 is a flowchart illustrating an example of processing of the bus system of FIG. 4;
FIGS. 10A to 10K are diagrammatic views illustrating structures of commands and responses used for the processing operation illustrated in FIG. 9;
FIG. 11 is a flowchart illustrating operation of a controller shown in FIG. 4 in the operation of FIG. 9;
FIG. 12 is a flowchart illustrating operation of a target show in FIG. 4 in the operation of FIG. 9;
FIG. 13 is a diagrammatic view showing an example of a structure of a queue;
FIG. 14 is a diagrammatic view showing a different example of a structure of a queue;
FIG. 15 is a flowchart illustrating a different example of processing of the bus system of FIG. 4;
FIGS. 16A to 16H are diagrammatic views illustrating structures of commands and responses illustrated in the example of processing of FIG. 15;
FIG. 17 is a flowchart illustrating operation of a controller shown in FIG. 15;
FIG. 18 is a flowchart illustrating operation of a target shown in FIG. 15;
FIG. 19 is a diagrammatic view showing a further example of a structure of a queue;
FIG. 20 is a flowchart illustrating another example of processing of the controller shown in FIG. 15;
FIGS. 21 and 22 are flowcharts illustrating different examples of processing of the target shown in FIG. 15;
FIG. 23 is a flowchart illustrating an allocation process of a queue;
FIG. 24 is a flowchart illustrating a further example of processing of the bus system of FIG. 4;
FIGS. 25A to 25C are schematic views showing several media; and
FIG. 26 is a block diagram showing an example of a construction of a personal computer shown in FIG. 25A.

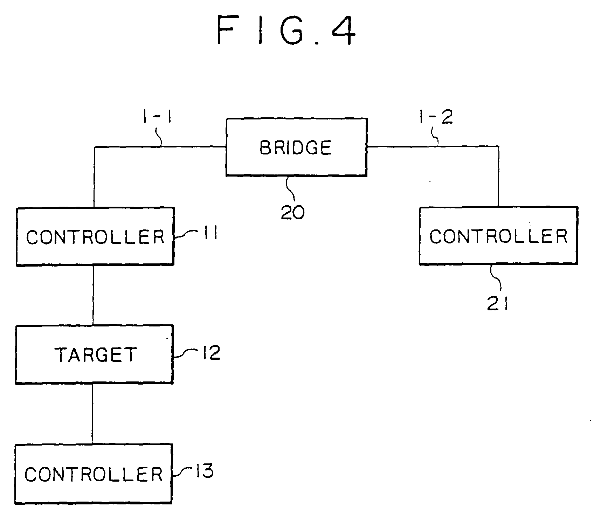

Referring to FIG. 4, there is shown an example of a construction of a bus system to which an embodiment of the present invention may be applied. The bus system shown includes an IEEE 1394 high speed serial bus 1-1 to which a controller 11, a target 12 and a controller 13 are connected, and another IEEE 1394 high speed serial bus 1-2 to which a controller 21 is connected. The IEEE 1394 high speed serial bus 1-1 and the IEEE 1394 high speed serial bus 1-2 are connected to each other by a bridge 20. The controller 11, target 12, and controllers 13 and 21 may be formed from various information processing apparatus such as a personal computer, a video tape recorder (VTR), a television receiver, and a satellite broadcasting reception apparatus.

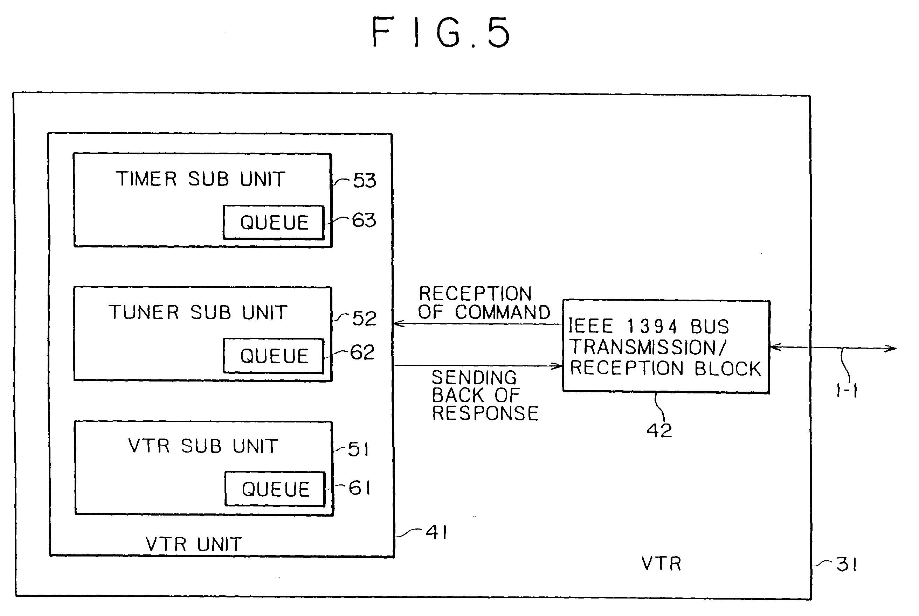

For example, where the target 12 is formed from a VTR, the VTR 31 has such functioning blocks as shown in FIG. 5. Referring to FIG. 5, the VTR shown is generally denoted at 31 and includes a VTR unit 41 for executing recording or playback processing onto or from a video tape not shown, and an IEEE 1394 bus transmission/reception block 42 for executing interfacing processing between the VTR unit 41 and the IEEE 1394 high speed serial bus 1-1.

The VTR unit 41 includes three sub units, that is, a VTR sub unit 51, a tuner sub unit 52 and a timer sub unit 53. The VTR sub unit 51 executes processing for recording and playing back the video tape. The tuner sub unit 52 executes processing for receiving a broadcasting wave. The timer sub unit 53 performs a time counting operation to enable the tuner sub unit 52 to receive a predetermined broadcasting program or to enable the VTR sub unit 51 to start a recording or reproduction operation at a predetermined point of time.

The VTR sub unit 51, tuner sub unit 52 and timer sub unit 53 have corresponding queues 61 to 63 built therein, respectively, and store corresponding information when a command is accepted from a controller.

The IEEE 1394 bus transmission/reception block 42 receives and analyzes data transferred from another apparatus over the IEEE 1394 high speed serial bus 1-1 and transmits the data to the VTR unit 41, VTR sub unit 51, tuner sub unit 52 or timer sub unit 53. Further, when predetermined data is inputted from the VTR unit 41, VTR sub unit 51, tuner sub unit 52 or timer sub unit 53, the IEEE 1394 bus transmission/reception block 42 transmits the data to the IEEE 1394 high speed serial bus 1-1.

From the standard, it is required that each unit or sub unit send back a response within 100 milliseconds at the latest after it receives a command. A command is a control signal which is transmitted from a controller to a target, and a response is a signal which the target sends back to the controller in response to the control signal. The controller and the target are relative to each other, and any electronic apparatus (node) connected to a bus can serve as any of the controller and the target.

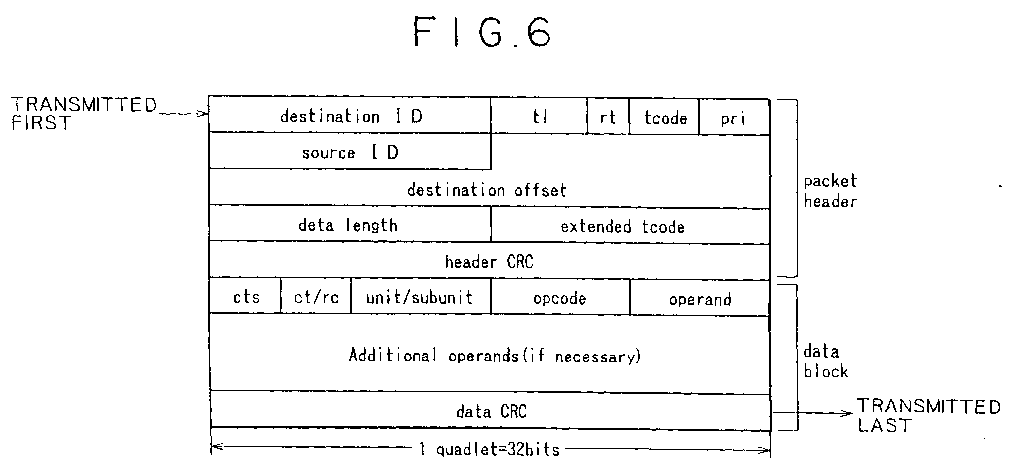

In each of the IEEE 1394 high speed serial bus 1-1 and IEEE 1394 high speed serial bus 1-2, a command or a response is transmitted by asynchronous communication. FIG. 6 shows a structure of a packet used in asynchronous communication. Both of the command and the response are transmitted in accordance with the format of the same structure shown in FIG. 6. The transmission of the command or response illustrated in FIG. 6 is performed in order beginning with the left upper corner and ending with the right lower corner of the packet of FIG. 6.

In "destination_ID" of 16 bits at the top of a packet header of the packet, the node ID of an electronic apparatus (node) of a destination of the packet is described. For example, where the packet illustrated is a command, the node ID of the target is described in "destination_ID".

"tl" denotes a transaction label, which is used for collation of the command and a response. Here, the term "transaction" signifies a command or a response. "rt" denotes a retry code, which designates a re-sending method. "tcode" denotes a transaction code which designates a kind of the packet and a type of the transaction.

"pri" denotes priority, which represents a priority degree of the packet. "source ID" denotes the ID of the source of transmission of the packet. For example, where this packet is a packet of a command, the node ID of the controller is described in "source ID".

"destination offset" represents the address of a descriptor into which information of the packet is to be stored. "data length" represents the length of a data block of the packet. "extended tcode" is used in order to expand the transaction code. "header CRC" is used for error correction of the packet header. The elements from the "destination_ID" to the "header CRC" form the packet header.

The data block which follows the packet header has "cts" placed at the top thereof. "cts" denotes a command transaction set, in which an ID of a command set is described. "ct/rc" (ctype/rc (response code)) represents a functional class of a command or a result of processing of a command. "unit/subunit" represents whether the packet is for an entire unit or for part of a unit, that is, for some sub unit. "opcode" denotes a command, and "operand" following "opcode" represents a parameter of the command. A required number of such "opcode" and "operand" are placed. "data CRC" for error correction is placed at the last of the data block.

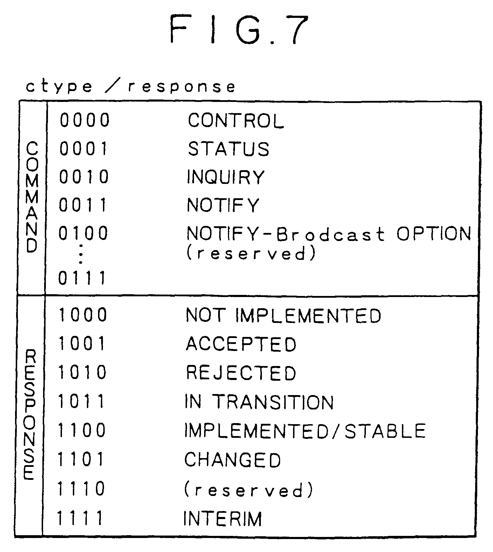

FIG. 7 illustrates an example of a command and a response. In the "ct/rc" of FIG. 6 described above, for example, where the command is NOTIFY, '0011' is described, but where the command is NOTIFY-Broadcast, '0100' is placed. The command NOTIFY is used to request a controller for notification when a variation occurs with the state of the target, and the command NOTIFY-Broadcast is used to request that notification when a variation in state occurs be performed by broadcasting.

The value '1000' of the response represents NOT IMPLEMENTED, which indicates that the target is not ready for the command. The value '1001' represents ACCEPTED, which signifies that the command is accepted. The value '1010' represents REJECTED, which signifies that the requested command is rejected. The value '1101' represents CHANGED, which is outputted, for example, when the state changes. The value '1111' represents INTERIM which is used as a response to be sent back within 100 milliseconds at present when the target cannot respond to the command within 100 milliseconds.

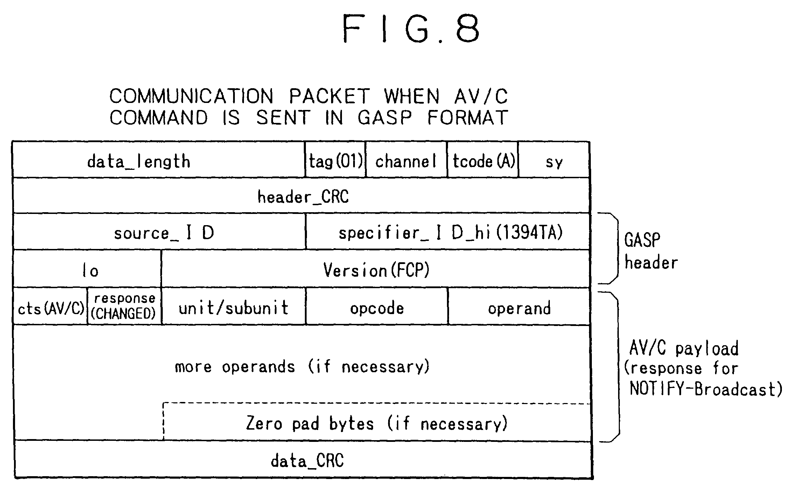

When an AV/C command is transmitted to a bus through a bridge, the GASP (Global Asynchronous Stream Packet) format illustrated in FIG. 8 is used. A packet of the format illustrated in FIG. 8 is transmitted at a timing of asynchronous communication. "data_length" represents a data length, and "tag" represents a label regarding the format of the packet and is "1" in the case illustrated in FIG. 8. "channel" signifies a channel. "tcode" represents a transaction code as described above and designates a kind of the packet and a type of a transaction. "sy" is, in the case shown, '0'. "header_CRC" is codes for error correction in the header.

The packet header described above is following by a GASP header. The GASP header has "source_ID" placed herein. In this "source_ID", the node ID of a node which signals the packet is described. In "specifier_ID" (formed from "hi" of 16 bits and "lo" of 8 bits), an OUI (Organizationally Unique Identifier) is described. The OUI is an ID allocated to a company, an organization or the like by the RA (IEEE Registration Authority). In the next "Version", a significance and a method of use decided by the company, organization or the like specified by "specifier_ID" are signified.

The succeeding data block section has a substantially similar structure to that described hereinabove with reference to FIG. 6, and therefore, overlapping description is omitted herein to avoid redundancy.

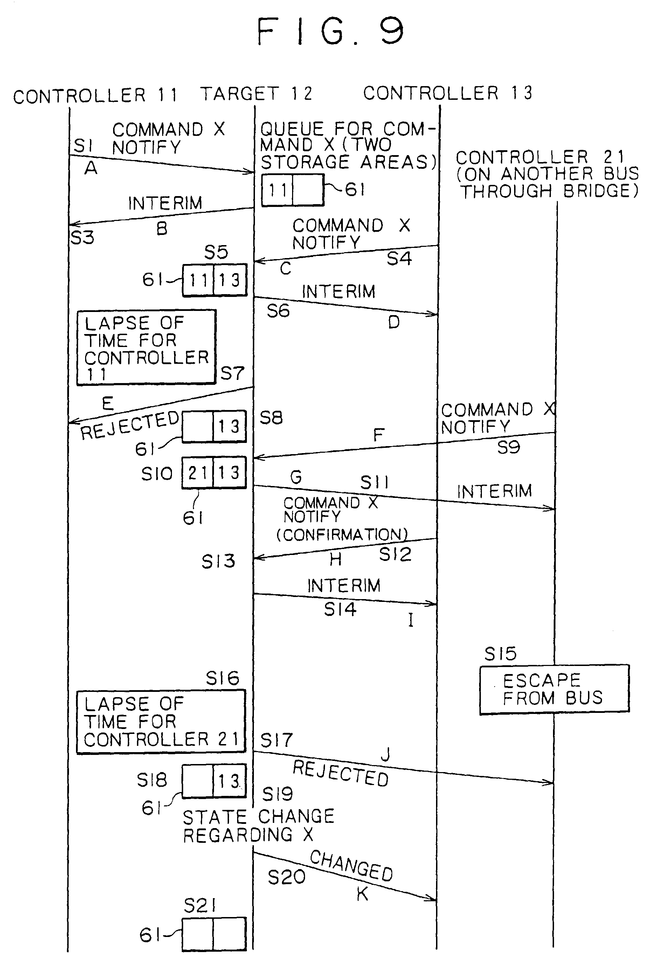

Now, an example of operation when the controller 11 and the controller 13 connected to the IEEE 1394 high speed serial bus 1-1 to which the target 12 is connected commonly and the controller 21 connected to the IEEE 1394 high speed serial bus 1-2 different from the IEEE 1394 high speed serial bus 1-1 to which the target 12 is connected as shown in FIG. 4 control the target 12 is described with reference to a flowchart of FIG. 9.

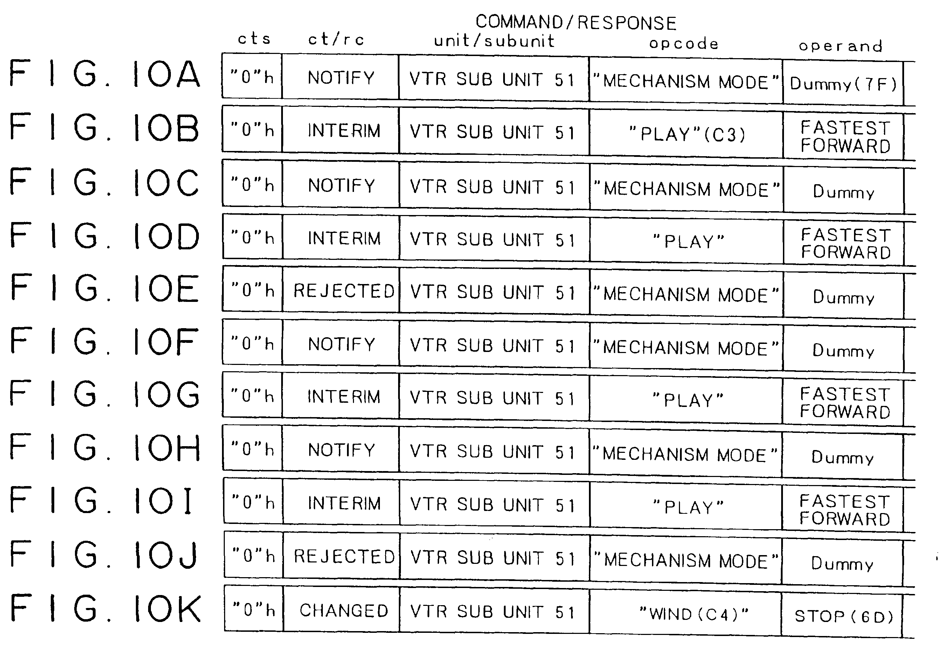

In step S1, the controller 11 transmits to the VTR sub unit 51 serving as the target 12 over the IEEE 1394 high speed serial bus 1-1 a command NOTIFY which requests the VTR sub unit 51 to notify the controller 11, if a change in state occurs with the VTR sub unit 51, of the change. A packet to be transmitted in this instance has such a construction as shown in FIG. 10A. In particular, "cts" is '0000', and "ct/rc' is NOTIFY. Since the target 12 is, in the present case, the VTR sub unit 51 of the VTR unit 41 of the VTR 31 as seen from FIG. 5, the VTR sub unit 51 is designated in 'unit/subunit'. Further, a mechanism mode is designated in 'opcode'. In 'operand', a parameter of a dummy (7Fh) is placed.

The VTR sub unit 51 serving as the target 12 receives the command NOTIFY from the controller 11 in step S2. More particularly, when the IEEE 1394 bus transmission/reception block 42 of the VTR 31 receives a packet destined for the VTR sub unit 51 serving as the target 12 from the IEEE 1394 high speed serial bus 1-1, it fetches the packet and supplies it to the VTR sub unit 51. The VTR sub unit 51 (target 12) stores the node ID of the controller 11 (in FIG. 9, the node ID is represented by the number 11) into a queue 61 corresponding to the command (command X). Then, in step S3, the VTR sub unit 51 serving as the target 12 generates a response INTERIM and transmits it from the IEEE 1394 bus transmission/reception block 42 to the controller 11 over the IEEE 1394 high speed serial bus 1-1. The format of the response INTERIM in this instance is such as seen from FIG. 10B. In particular, "cts" is '0000', and "ct/rc" is INTERIM. Further, "unit/subunit" is the VTR sub unit 51, and "opcode" and "operand" are, for example, 'play' (C3h) or 'FASTEST FORWARD' when the mechanism mode of the VTR sub unit 51 is a play mode of high speed fast feeding. Consequently, the controller 11 can discriminate that the VTR sub unit 51 serving as the target 12 is in the PLAY mode of high speed fast feeding.

Similarly, the controller 13 transmits the command NOTIFY to the target 12 in step S4. The format upon the transmission is similar to that illustrated in FIG. 10A as seen from FIG. 10C. In step S5, the VTR sub unit 51 stores the node ID of the controller 13 (in FIG. 9, the node ID is represented by the number 13) into the queue 61. Then in step S6, the VTR sub unit 51 sends back the response INTERIM to the controller 13. The format of the packet for the response in this instance is such as illustrated in FIG. 10D. This format is substantially similar to that illustrated in FIG. 9B.

On the other hand, the VTR sub unit 51 instructs the timer sub unit 53 to start a time counting operation of a predetermined time (for example, 60 seconds) when the node ID of the controller 11 is stored into the queue 61 in step S2. If the time of 60 seconds is counted, then the timer sub unit 53 notifies the VTR sub unit 51 of this. When the VTR sub unit 51 detects that the notification of lapse of 60 seconds is received, it transmits a response REJECTED to the controller 11 in step S7. The format of the response REJECTED in this instance is such as illustrated in FIG. 10E. A value which represents REJECTED is described in "ct/rc". Then in step S8, the VTR sub unit 51 erases the node ID of the controller 11 from the queue 61.

In this manner, in the example described above, even if the VTR sub unit 51 serving as the target 12 stores information corresponding to a command (in the example described above, the information is the ID of the node which has outputted the command) once, when the predetermined time (in the example described above, 60 seconds) set in advance elapses after the storage, the VTR sub unit 51 executes processing of rejecting the command if confirmation processing (such processing as in steps S12 and S13 which are hereinafter described) is not performed within the time.

Accordingly, for example, when the controller 21 thereafter transmits a command NOTIFY using the format illustrated in FIG. 10F, the VTR sub unit 51 accepts the command NOTIFY in step S9 and stores the node ID of the controller 21 (in FIG. 9, the node ID is represented by the number 21) into the queue 61 in step S10. Further, in step S11, the VTR sub unit 51 sends back a response INTERIM in the format illustrated in FIG. 10G to the controller 21.

On the other hand, if the controller 13 transmits the command NOTIFY in such a format as shown in FIG. 10H again to the target 12 in step S12 before 60 seconds elapse (for example, within 50 seconds) after the command NOTIFY is transmitted to the target 12 in step S4, then the VTR sub unit 51 executes confirmation processing in step S13. In particular, since the node ID of the controller 13 is stored already in the queue 61, the VTR sub unit 51 resets the timer once and causes the timer to start its timer operation for 60 seconds again. Then in step S14, the VTR sub unit 51 sends back a response INTERIM in the format illustrated in FIG. 10I to the controller 13.

Thereafter, for example, even if the controller 21 escapes from the IEEE 1394 high speed serial bus 1-2 in step S15, bus resetting of the IEEE 1394 high speed serial bus 1-2 side is not conveyed to the VTR sub unit 51 as the target 12 connected to the IEEE 1394 high speed serial bus 1-1 different from the IEEE 1394 high speed serial bus 1-2 to which the controller 21 is connected. However, when it is discriminated in step S16 that 60 seconds elapse after the node ID of the controller 21 is stored into the queue 61 in step S10, the VTR sub unit 51 transmits a response REJECTED illustrated in FIG. 10J to the controller 21 in step S17. Then in step S18, the VTR sub unit 51 erases the node ID of the controller 21 from the queue 61.

It is to be noted that, in the example described above, although the response REJECTED outputted in step S17 is not received by the controller 21 because the controller 21 has escaped already from the bus, this does not particularly give rise to a problem.

If it is detected in step S19 that the mechanism mode has changed from the reproduction state to, for example, a stopping state, then the VTR sub unit 51 transmits, in step S20, a response CHANGED to the controller of the node ID stored in the queue 61, in the present example, to the controller 13. The format in this instance is such as illustrated in FIG. 10K. In particular, "ct/rc" is CHANGED, and "opcode" and "operand" are 'WIND' and 'STOP', respectively. This signifies that the VTR sub unit 51 stops in a state wherein the video tape is wrapped around a rotary drum (not shown).

Further in step S21, the VTR sub unit 51 erases the node ID of the controller to which the response has been transmitted in step S20, in the present example, the node ID of the controller 13.

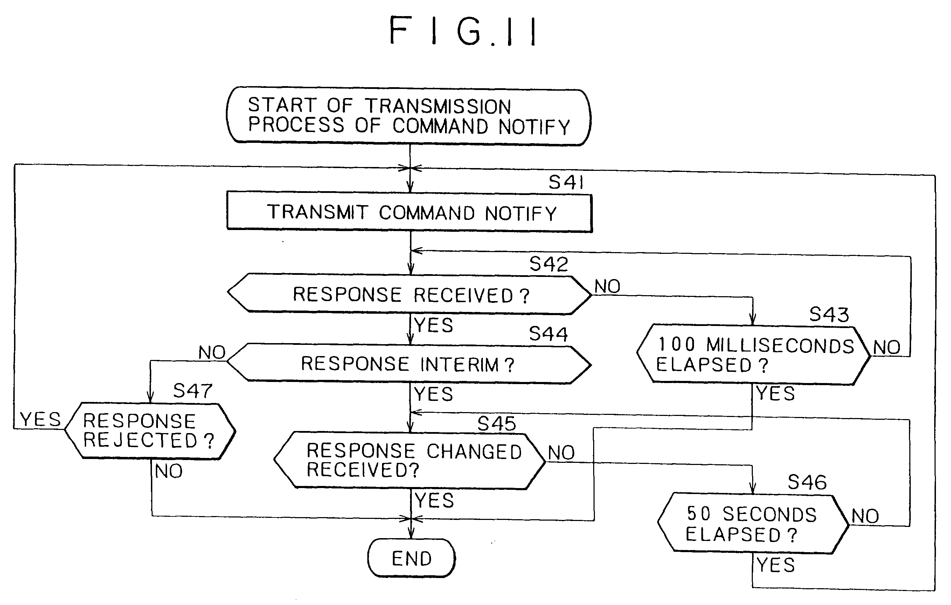

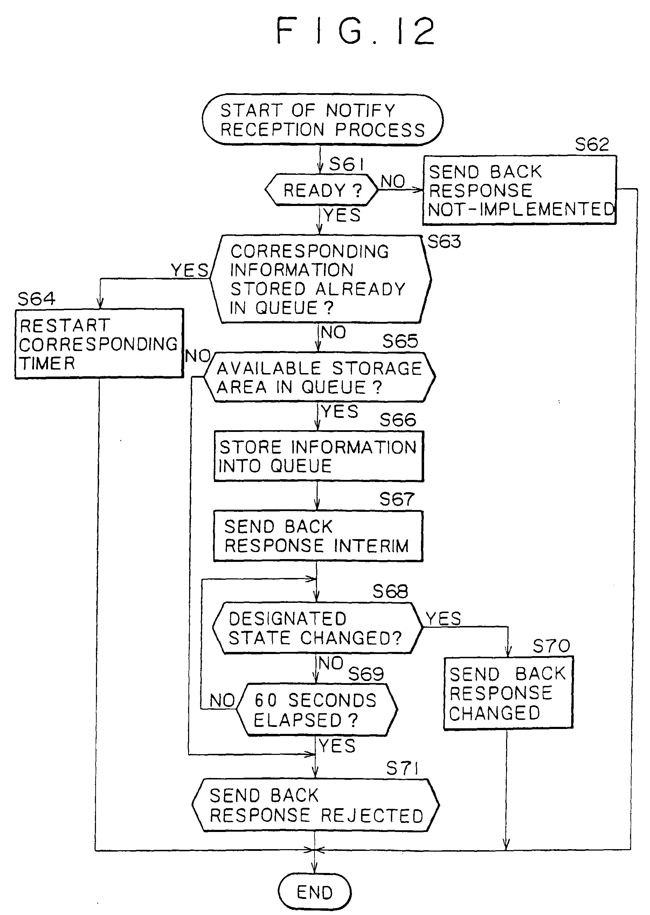

In this manner, in the bus system to which the present invention is applied, after a target accepts a command NOTIFY, it resets the acceptance of the command at a point of time when 60 seconds elapse after the acceptance. Therefore, if the controller which has outputted the command NOTIFY intends to have the command outputted once kept, then it outputs the command again for confirmation before 60 seconds elapse. The processes of the controller and the target described above are individually illustrated in FIGS. 11 and 12, respectively.

First, the transmission process for a command NOTIFY of the controller 13 is described with reference to a flowchart of FIG. 11. In step S41 (which corresponds to the step S4 of FIG. 9), the controller 13 transmits a command NOTIFY to the target 12. In step S42, the controller 13 discriminates whether or not a response is received from the target 12, and if a response is not received, then the processing of the controller 13 advances to step S43, in which the controller 13 discriminates whether or not 100 milliseconds have elapsed after the transmission of the command NOTIFY. If 100 milliseconds have not elapses, then the processing returns to step S42 to repeat the processing described.

If no response is received successfully from the target before 100 milliseconds elapse after the command NOTIFY is transmitted in step S41, then the controller 13 ends its processing. In other words, according to the standard, the target is required to send back a response within 100 milliseconds when it receives a command from a controller. Accordingly, when no response is received within 100 milliseconds, the controller determines that the target cannot receive the command by some cause, and ends its processing. Consequently, continued processing for more than a required period of time is prevented.

If it is discriminated in step S42 that a response is received, then the controller 13 advances its processing to step S44, in which it discriminates whether or not the response received is INTERIM. As described hereinabove with reference to FIG. 9, a target which receives a command NOTIFY sends back a response INTERIM within 100 milliseconds (instep S6 of FIG. 9 and in step S67 of FIG. 12 which is hereinafter described). If it is discriminated in step S44 that a response INTERIM is received, then the processing advances to step S45, in which the controller 13 discriminates whether or not a response CHANGED is received. If a response CHANGED is not received, then the processing advances to step S46, in which the controller 13 discriminates whether or not 50 seconds have elapses after it transmitted the command NOTIFY in step S41. If 50 seconds do not elapse, then the processing returns to step S45 to repeat the similar processing.

In this manner, the controller 13 waits until a response CHANGED is received from the target 12 before 50 seconds elapse after the command NOTIFY is transmitted. The time of 50 seconds is a little shorter than the time for which the target 12 holds information stored in the queue 61, and in the present example, since the time for which information corresponding to a command is held in the queue 61 is 60 seconds, the time of 50 seconds which is a little shorter than 60 seconds is counted.

If it is discriminated in step S46 that 50 seconds have elapses, then the processing returns to step S41, in which the controller 13 transmits the command NOTIFY again (which corresponds to the processing in step S12 of FIG. 9). Consequently, as described above, the target 12 executes confirmation processing and restarts its timer (which correspond to the processing in step S13 of FIG. 9 and in step S64 of FIG. 12 which is hereinafter described).

If it is discriminated in step S45 that a response CHANGED is received, then since a response corresponding to the command NOTIFY transmitted to the target in step S41 has been obtained successfully, the controller 13 ends the processing (which corresponds to the processing in step S20 of FIG. 9 or in step S70 of FIG. 12 which is hereinafter described).

On the other hand, if it is discriminated in step S44 that the received response is not INTERIM, then the processing advances to step S47, in which the controller 13 discriminates whether or not the received response is REJECTED. If the received response is REJECTED, then this signifies that a number of instructions from the other controllers equal to the maximum number are registered already in the queue 61 of the target 12, for example, as in the case of the processing in step S7 of the flowchart of FIG. 9. Therefore, when the controller 13 wants to receive a notification of a change of the state of the target 12, it returns the processing to step S41 so that the processing of transmitting the command NOTIFY is executed again. Alternatively, the processing may return to step S41 after a fixed interval of time elapses.

If it is discriminated in step S47 that the received response is not REJECTED, then since this signifies that the received response is NOT-IMPLEMENTED, the target 12 cannot cope with the command NOTIFY, and consequently, the processing is ended.

Subsequently, processing of the target 12 when a command NOTIFY is received is described with reference to a flowchart of FIG. 12. First, in step S61, the target 12 discriminates whether or not it is ready for the received command NOTIFY. If the target 12 is not ready for the command NOTIFY, it advances the processing to step S62, in which it transmits a response NOT-IMPLEMENTED to the controller, and then ends its processing. At this time, the controller performs discrimination of NO in step S47 of the flowchart of FIG. 11 as described above.

If it is discriminated in step S61 that the target 12 is ready for the command NOTIFY, then it discriminates in step S63 whether or not information corresponding to the controller from which the command has been transmitted, that is, the ID of the controller, is registered already in the queue 61 thereof. If it is discriminated that the node ID of the controller from which the command has been transmitted is not registered in the queue 61 as yet, then the processing advances to step S65, in which the target 12 discriminates whether or not the queue 61 has some free storage area. If the queue 61 has some free storage area, then the processing advances to step S66, in which the target 12 stores the node ID of the controller, from which the command NOTIFY has been transmitted, into one of available free areas of the queue 61 (this processing corresponds to the processing in steps S2 and S5 of FIG. 9). Then, in next step S67 (which corresponds to the step S3 or S6 of FIG. 9), the target 12 transmits a response INTERIM to the controller from which the command NOTIFY has been transmitted. As described above, it is prescribed by the standard that transmission of the response INTERIM be executed within 100 milliseconds after reception of the command NOTIFY as described hereinabove.

Then, the processing advances to step S68, in which the target 12 discriminates whether or not the designated internal state exhibits some change. If the internal state does not exhibit any change, the processing advances to step S69, in which the target 12 discriminates whether or not 60 seconds have elapses after the node ID of the controller was stored (or after the command NOTIFY was received or the response INTERIM was sent back). If 60 seconds do not elapse, then the processing returns to step S68 so that similar processing is repetitively executed. If a change of the internal state is detected before 60 seconds elapse, then the processing advances to step S70, in which the target 12 sends back a response CHANGED to the controller from which the command NOTIFY has been transmitted and whose node ID is stored in the queue 61 (the step S70 corresponds to step S20 of FIG. 9).

If it is discriminated in step S69 that 60 seconds have elapses, then the processing advances to step S71, in which the target 12 sends back a response REJECTED to the controller from which the command NOTIFY has been transmitted and whose node ID is stored in the queue 61 (step S71 corresponds to step S17 of FIG. 9). Also when it is discriminated in step S65 that the queue 61 has no free storage area, a response REJECTED is sent back in step S71. In such a case that a command NOTIFY is transmitted from the controller 21 while the node IDs of the controller 11 and the controller 13 are registered in the queue 61 of the target 12 in step S5, the target 12 sends back a response REJECTED although this processing is not illustrated, for example, in FIG. 9.

If it is discriminated in step S63 that corresponding information is stored already in the queue 61 of the target 12, then the target 12 executes, in step S64, processing of restarting the corresponding timer (to which the processing in step S13 of FIG. 9 corresponds).

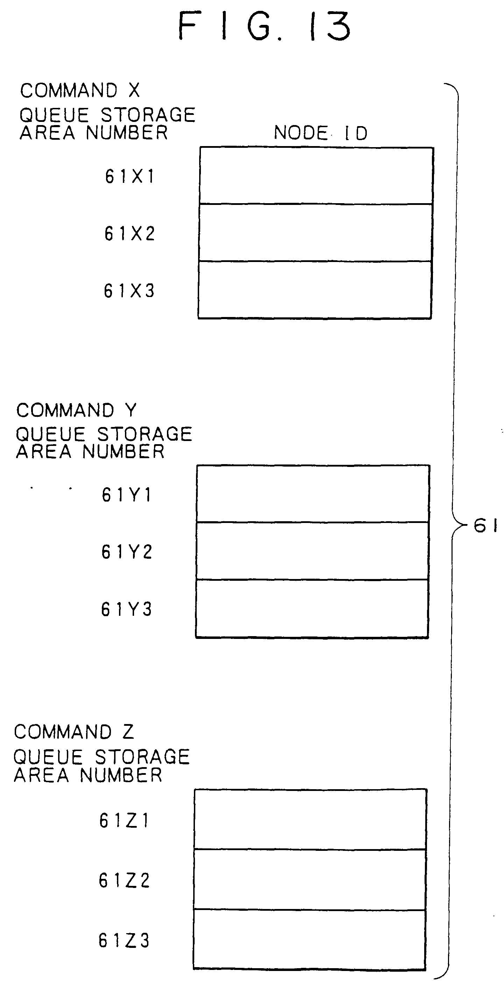

Subsequently, a queue is described. For example, a queue 61 is prepared for each command as seen in FIG. 13. For the command X, a queue having three storage areas of queue storage area numbers 61X1 to 61X3 is prepared; for the command Y, a queue having three storage areas of queue storage area numbers 61Y1 to 61Y3 is prepared; and for the command Z, a queue having three storage areas of queue storage area numbers 61Z1 to 61Z3 is prepared. Accordingly, in the example shown in FIG. 13, commands from three controllers can be stored for each kind of command.

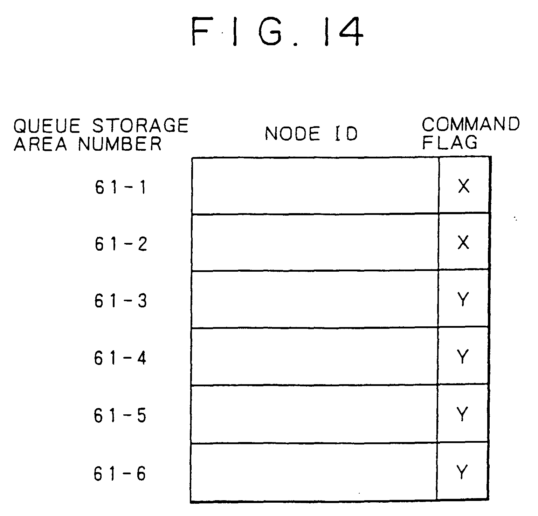

FIG. 14 shows another example of a construction of the queue 61. Referring to FIG. 14, in the construction example shown, a queue 61 having six storage areas of queue storage area numbers 61-1 to 61-6 is prepared such that each of the storage areas may store the node ID of any controller for any command. Therefore, for each storage area of the queue 61, a command flag representative of a command of a node ID stored in the queue is stored additionally. In the example illustrated in FIG. 14, commands outputted from controllers of node IDs stored in the store areas of the storage area numbers 61-1 and 61-2 of the queue are the command X, and commands outputted from controllers of node IDs stored in the storage areas of the storage area numbers 61-3 to 61-6 of the queue are the command Y.

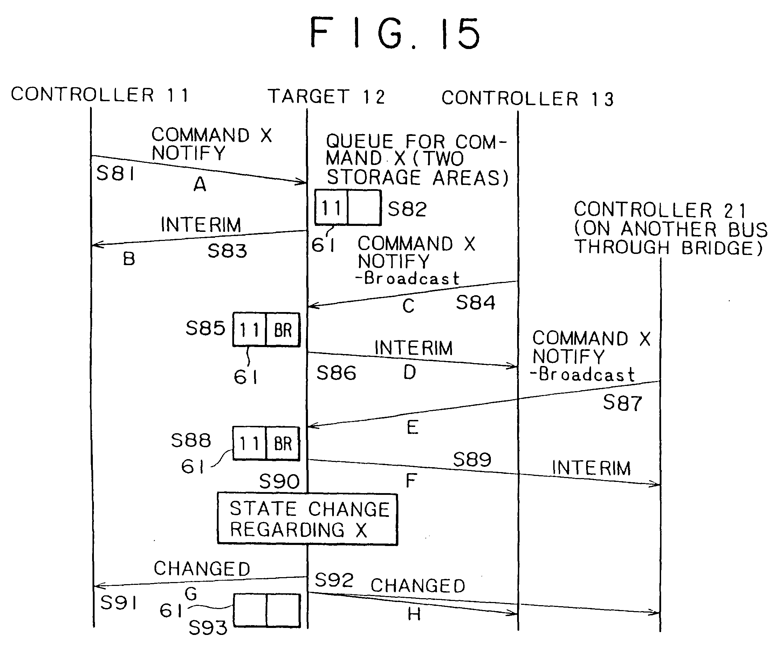

Subsequently, processing when a controller outputs a command NOTIFY-Broadcast is described with reference to a flowchart of FIG. 15. Also in the present example, the controller 11, controller 13 and target 12 are connected to the same IEEE 1394 high speed serial bus 1-1 while the controller 21 is connected to the IEEE 1394 high speed serial bus 1-2 which is connected to the IEEE 1394 high speed serial bus 1-1 through the bridge 20.

In step S81, the controller 11 outputs a command NOTIFY to the target 12. The target 12 stores the node ID of the controller 11 into the queue 61 in step S82 and sends back a response INTERIM to the controller 11 in step S83.

On the other hand, the controller 13 outputs a command NOTIFY-Broadcast to the target 12 in step S84. While the command NOTIFY requests the target 12 to transmit a response when a state change occurs with the target 12 only to the controller from which the command NOTIFY is outputted, the command NOTIFY-Broadcast requests the target 12 to transmit a response of a state change as a broadcast.

When the target 12 receives the command NOTIFY-Broadcast from the controller 13, it stores it into the queue 61 built therein that the command for requesting to return a response by a broadcast is received. In the example illustrated in FIG. 15, the storage is represented by the characters BR which represent a broadcast. Then in step S86, the target 12 outputs a response INTERIM to the controller 13.

In such a condition as described above, for example, the controller 21 outputs the command NOTIFY-broadcast to the target 12 in step S87. In this instance, the node ID of the controller 11 and the information BR representing a broadcast are stored already in the queue 61 of the target 12. However, a command for requesting for a response by a broadcast can be accepted in an overlapping relationship. Thus, the target 12 sends back not a response REJECTED but a response INTERIM to the controller 21 in step S89.

Thereafter, if the state corresponding to the command X changes in step S90, then the target 12 sends back a response CHANGED to the controller 11 corresponding to the node ID 11 stored in the queue 61 in step 91. Further, in step S92, the target 12 broadcasts a response CHANGED to the controller 13 and the controller 21, that is, to the IEEE 1394 high speed serial bus 1-1. The response CHANGED is transmitted in the GASP format described hereinabove with reference to FIG. 8. Accordingly, the response CHANGED is transferred from the IEEE 1394 high speed serial bus 1-1 to the IEEE 1394 high speed serial bus 1-2 by the bridge 20. As a result, the response CHANGED can be received not only by the controller 13 connected to the bus to which the target 12 is connected commonly but also by the controller 21 which is connected to the different bus.

Since the response CHANGED is outputted in such a manner as described above, the target 12 erases the information stored in the queue 61 in step S93.

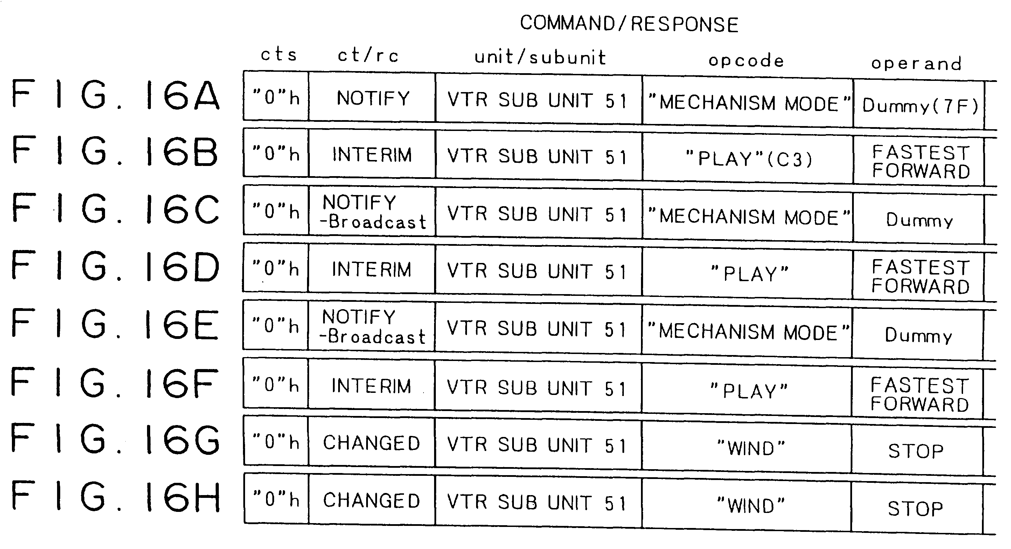

The formats of commands transferred in steps S81, S83, S84, S86, S87, S89, S91 and S92 of FIG. 15 are such as illustrated in FIGS. 16A to 16H, respectively. Since the formats of FIGS. 16A to 16H are similar to those of FIGS. 10A to 10H except that "ct/rc" in the formats of FIGS. 16C and 16E is NOTIFY-Broadcast, description of them is omitted herein to avoid redundancy.

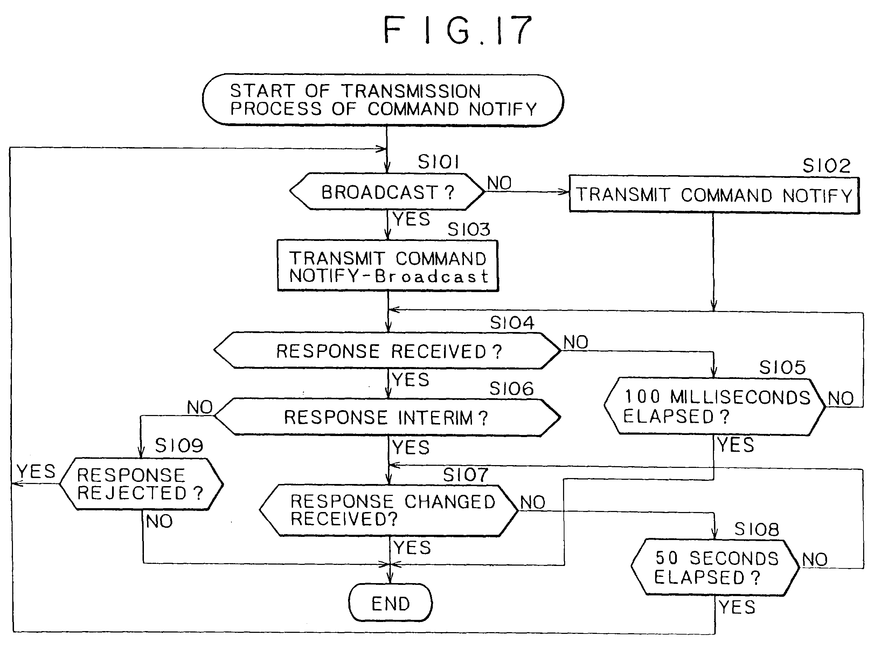

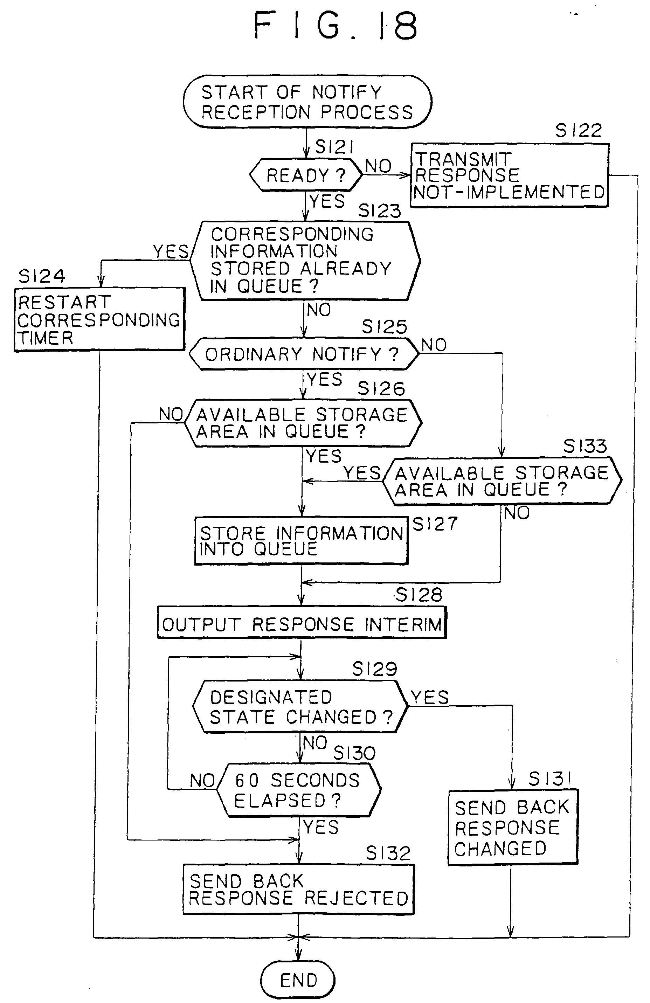

The processing of the controller illustrated in the flowchart of FIG. 15 can be represented in such a flowchart as illustrated in a flowchart of FIG. 17, and the processing of the target can be represented in such a flowchart as illustrated in a flowchart of FIG. 18.

The processing of a controller illustrated in FIG. 17 is described. Referring to FIG. 17, in step S101, the controller (controller 11, 13 or 21) discriminates whether or not it wants to receive a response from the target 12 by a broadcast. If the controller does not want to receive a response by a broadcast, that is, if the controller wants to receive a response transmitted only to the controller itself, then the processing advances to step S102, in which the controller transmits a command NOTIFY to the target 12. The controller 11 of FIG. 15 performs this processing in step S81.

If it is discriminated in step S101 that the controller wants to receive a response by a broadcast, then the processing advances to step S103, in which the controller transmits a command NOTIFY-Broadcast. The controller 13 and the controller 21 perform this processing in steps S84 and S87 in FIG. 15, respectively.

After the processing in step S102 or step S103, the processing advances to step S104. Since processing in steps S104 to step S109 is similar to the processing in steps S42 to S47 illustrated in FIG. 11, overlapping description of it is omitted herein to avoid redundancy.

Now, the processing of the target 12 illustrated in FIG. 15 is described with reference to a flowchart of FIG. 18. Processing in steps S121 to S132 of FIG. 18 is basically similar to the processing in steps S61 to S71 described hereinabove with reference to FIG. 12. However, the processing of FIG. 18 is different from the processing in steps S61 to S71 in that a step S125 is inserted next to step S123 of FIG. 18 which corresponds to step S63 of FIG. 12 and that processing in step S133 when a discrimination of NO is made is inserted.

In particular, in the processing of FIG. 18, if the target 12 discriminates that it is ready for a command in step S121, then the target 12 discriminates in step S123 whether or not information corresponding to the command inputted is stored already in the queue 61. If such information is not stored, then the processing advances to step S125. Then in step S125, it is discriminated whether or not the received command is an ordinary command NOTIFY. If the received command is an ordinary command NOTIFY, then the processing advances to step S126 so that processing similar to the processing in step S65 et seq. of FIG. 12 is performed in step S126 et seq.

On the contrary, if it is discriminated in step S125 that the received command is not an ordinary command NOTIFY, that is, the received command is a command NOTIFY-Broadcast, then the processing advances to step S133, in which the target 12 discriminates whether or not the queue 61 thereof has some free storage area. If the queue 61 has some free storage area, then the processing advances to step S127, in which the information is stored into the queue 61, and further to step S128, in which a response INTERIM is outputted. On the other hand, if it is discriminated in step S133 that the queue 61 does not have a free storage area, then the processing skips step S127 and advances to step S128, in which a response INTERIM is outputted immediately. Thereafter, similar processing to that described hereinabove with reference to FIG. 12 is executed.

In this manner, if a command NOTIFY-Broadcast which requests for a response by a broadcast is accepted, then even if the queue is fully occupied, the command can be accepted.

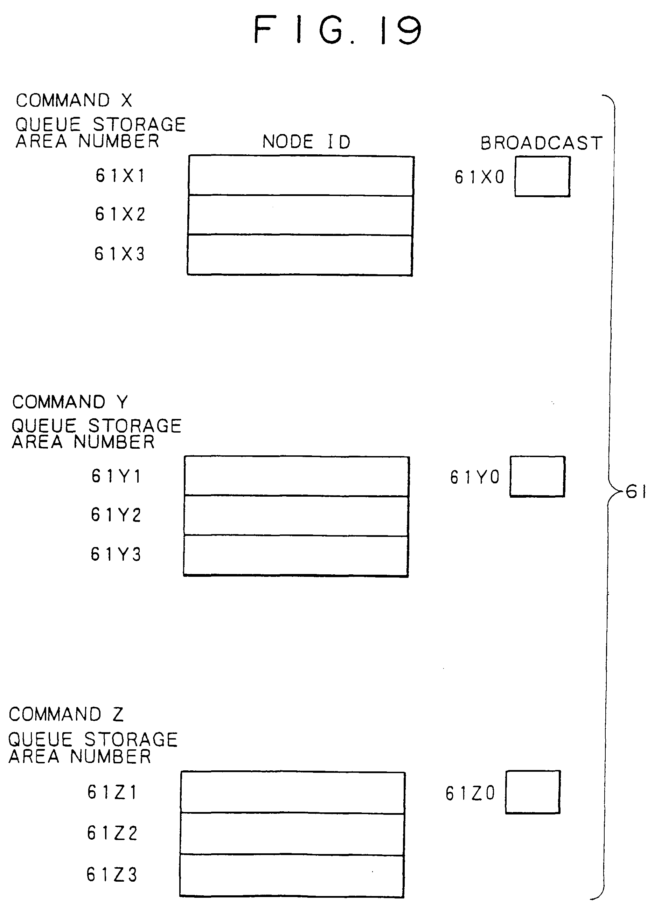

FIG. 19 illustrates a further example of a construction of a queue. Referring to FIG. 19, in the construction example illustrated, each queue has a storage area 61X0, 61Y0 or 61Z0 for exclusive use for registering, when a command which requests for a response by a broadcast is accepted, the command. The other construction of each queue is similar to that described hereinabove with reference to FIG. 13.

In particular, in the example illustrated in FIG. 19, a command which requests for a response by a broadcast is stored into the storage area 61X0, 61Y0 or 61Z0 for exclusive use while, in each queue of the construction shown in FIG. 13, also a command which requests for a response by a broadcast is handled similarly to any other ordinary command which requests for transfer of a response with a node ID designated.

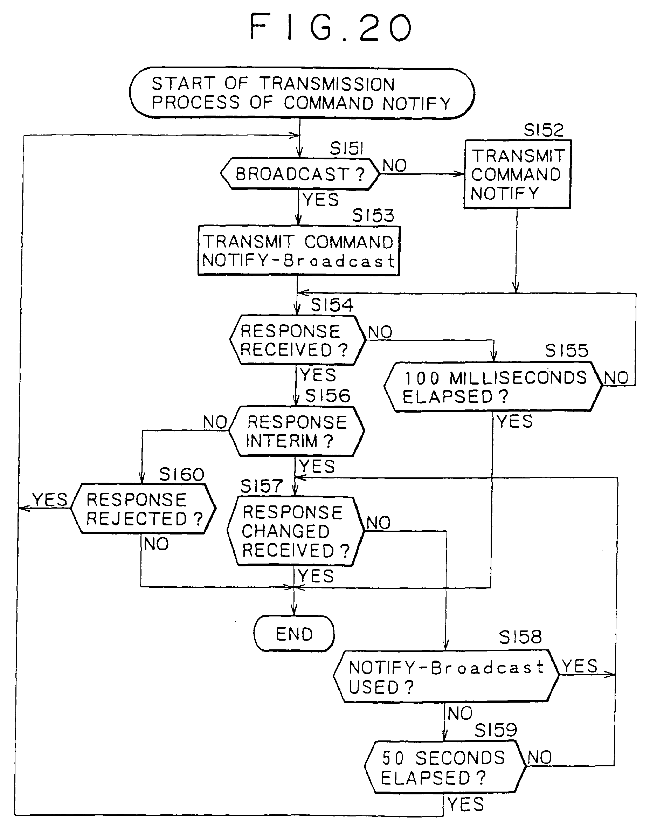

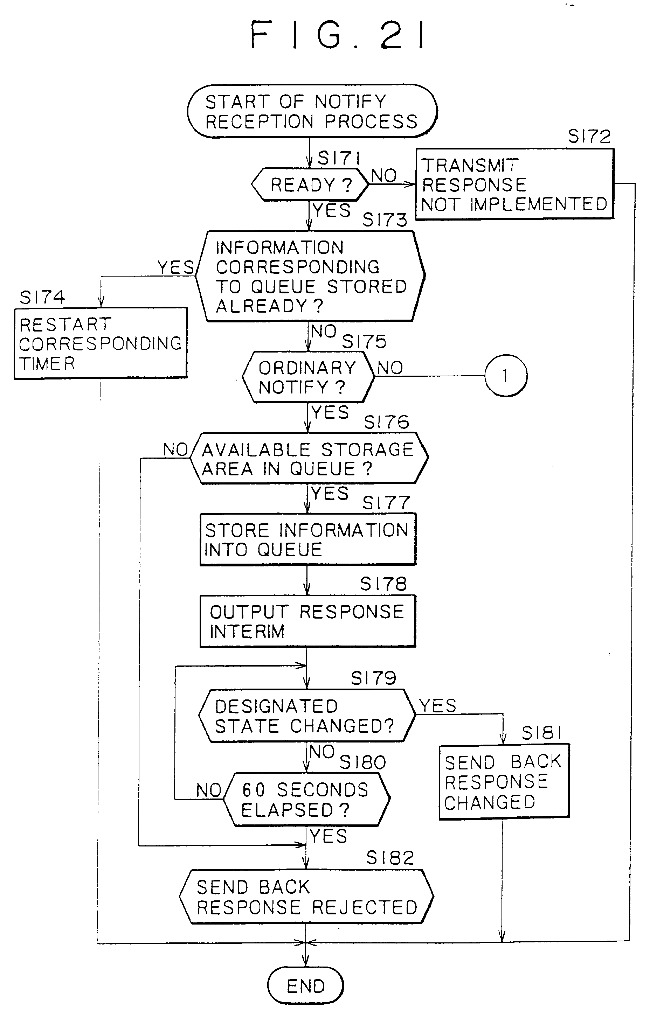

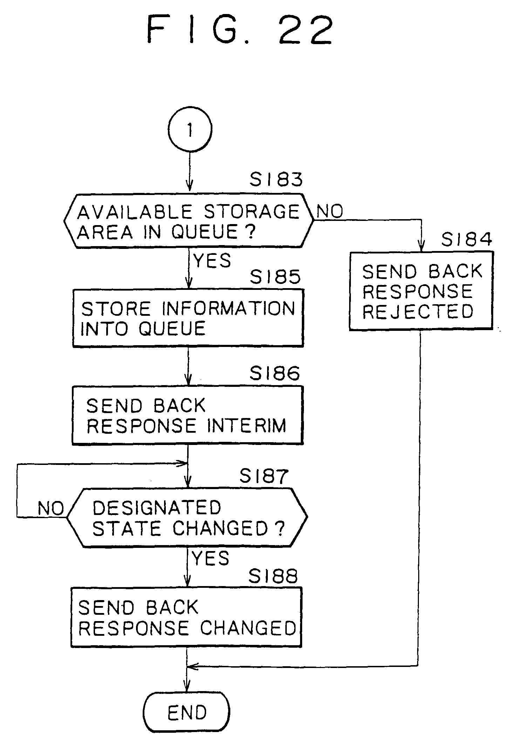

In the foregoing, information both of a command NOTIFY-Broadcast which requests for a response by a broadcast and a command NOTIFY which requests for a response with a node ID designated is reset at a point of time when 60 seconds elapse. However, it is otherwise possible to prevent the timer operation for 60 seconds from being applied when a request for a response by a broadcast is received. FIG. 20 illustrates processing of a controller in this instance, and FIGS. 21 and 22 illustrate processing of a target in this instance.

Referring first to FIG. 20, processing in steps S151 to S160 of the controller is basically similar to the processing in steps S101 to S109 described hereinabove with reference to FIG. 17. In the processing of FIG. 20, however, if it is discriminated in step S157 which corresponds to step S107 of FIG. 17 that a response CHANGED is not received, then the processing advances to step S158, in which it is discriminated whether or not the command NOTIFY-Broadcast has been used, that is, whether or not the processing in step S153 has been performed. If it is discriminated in step S158 that the command NOTIFY-Broadcast has not been used, or in other words, if it is discriminated that the command NOTIFY has been used, then the processing advances to step S159, in which it is discriminated whether or not 50 seconds have elapsed. If 50 seconds do not elapse, then the processing returns to step S157, but if 50 seconds have elapsed, then the processing returns to step S151. In this instance, processing similar to that described hereinabove with reference to FIG. 17 is performed thereafter.

On the other hand, if it is discriminated in step S158 that the command NOTIFY-Broadcast has been used, then the processing returns to step S157, in which it is discriminated whether or not a response CHANGED is received. Consequently, in this instance, the counting operation for 50 seconds is not performed.

Subsequently, processing of a target is described with reference to flowcharts of FIGS. 21 and 22. Also the processing illustrated in FIGS. 21 and 22 is basically similar to the processing in steps S121 to S132 described hereinabove with reference to FIG. 18. In the processing illustrated in FIGS. 21 and 22, however, it is discriminated in step S175, in case a discrimination of NO is made in step S173 of FIG. 21 which corresponds to step S123 of FIG. 18, whether or not the accepted command is an ordinary command NOTIFY. If the discrimination in step S175 is YES, then processing similar to the processing executed in steps S126 to S132 of FIG. 18 is executed in steps S176 to S182.

On the other hand, if it is discriminated in step S175 that the accepted command is not an ordinary command NOTIFY, that is, the accepted command is a command NOTIFY-Broadcast, then the processing advances to step S183, in which it is discriminated whether or not the queue 61 has some free storage area. If the queue 61 does not have a free storage area, then a response REJECTED is sent back in step S184.

On the other hand, if it is discriminated in step S183 that the queue 61 has some free storage area, then the processing advances to step S185, in which the target 12 stores information of the controller into the queue 61. Then, in step S186, the target 12 sends back a response INTERIM to the controller.

Further in step S187, the target 12 discriminates whether or not the designated state exhibits a change. If the designated state exhibits a change, then the processing advances to step S188, in which the target 12 sends back a response CHANGED to the controller.

In particular, if the command NOTIFY-Broadcast is accepted, then the information of the queue 61 is not erased even if 60 seconds elapse since then.

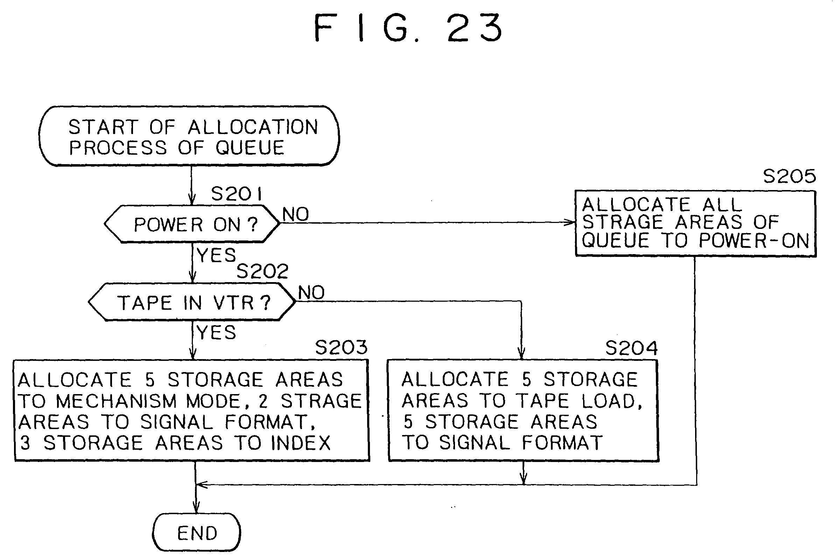

Subsequently, an allocation process for a queue is described with reference to a flowchart of FIG. 23. In particular, while a queue of each unit or each sub unit may store commands of a fixed kind, commands to be stored may be adaptively changed over so that different commands may be stored commonly in each queue. The flowchart of FIG. 23 illustrates an example of processing in this instance.

In the processing example illustrated in FIG. 23, the target 12 (VTR sub unit 51) discriminates in step S201 whether or not the power (power supply) is on. If the power is not on, then the processing advances to step S205, in which all storage areas of the queue of the target 12 are allocated to power-on. In particular, while the power is off, the target 12 is in most cases requested to provide a notification of a change in state when the power is turned on. While the power is off, the target 12 is seldom requested to provide a notification of a change in any other state, for example, a change of the mechanism mode, a change of the signal format or a change of the index. Therefore, when the power supply is off, a queue is used most efficiently if the queue is used for notification that the power supply is turned on.

If it is discriminated in step S201 conversely that the power is on, then the processing advances to step S202, in which the target 12 discriminates whether or not a tape is loaded in the VTR. If a tape is loaded in the VTR, then the processing advances to step S203, in which, for example, where the queue has 10 available storage areas, the target 12 allocates the mechanism mode to five storage areas of the queue, the signal format to two storage areas and the index to the remaining three storage areas. If it is discriminated in step S202 that no tape is loaded in the VTR, then the processing advances to step S204, in which the target 12 allocates a command regarding tape loading to five ones of the 10 storage areas of the queue and allocates commands regarding the signal format to the remaining five storage areas.

If storage areas of a queue to be allocated in response to a state are suitably changed in this manner, the queue can be utilized in a higher efficiency.

While, in the foregoing description, NOTIFY or NOTIFY-Broadcast is utilized as a command, the present invention can be applied also where a different command RESERVE is used. This command RESERVE is used by a controller to reserve a target. When a target accepts the command RESERVE from a controller, it can reject all commands from the other controllers regarding its operation.

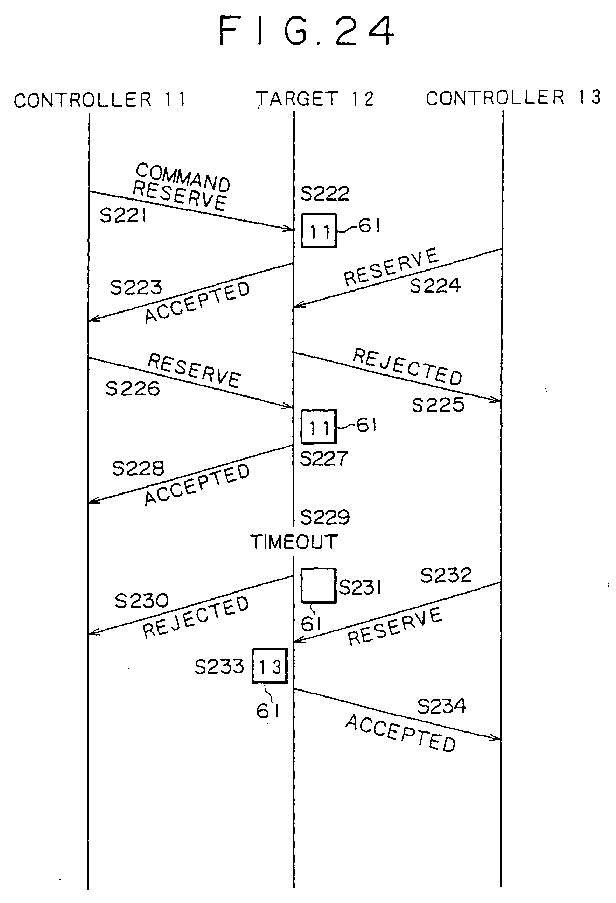

Subsequently, processing in this instance is described with reference to a flowchart of FIG. 24. In step S221, the controller 11 outputs a command RESERVE to the target 12 (VTR sub unit 51). The target 12 stores, in step S222, the node ID of the controller 11 into the queue 61. Then, the target 12 outputs a response ACCEPTED to the controller 11 in step S223 within 100 milliseconds after the command RESERVE is accepted.

After the target 12 is reserved in this manner, even if, for example, the controller 13 transmits the command RESERVE to the target 12 in step S224, since the target 12 has the node ID of the different controller stored already in the queue 61 thereof, it outputs a response REJECTED to the controller 13 in step S225. Consequently, the controller 13 can discriminate that the target 12 cannot be reserved because the target 12 is reserved by some other controller or from some other cause.

When the target 12 stores the node ID of the controller 11 into the queue 61 in step S222, it causes the timer sub unit 53 to start its time counting operation. Then, before 60 seconds elapse, the controller 11 transmits the command RESERVE to the target 12 again in step S226. The target 12 receives the command RESERVE and restarts the timer in step S227 to start time counting for 60 seconds again. Then in step S228, the target 12 outputs a response ACCEPTED to the controller 11.

By repetitively transmitting the command RESERVE before 60 seconds elapse in this manner, the controller 11 can reserve the target 12 for a required time.

If it is discriminated in step S227 that the timer restarted in step S227 counts up the required time, that is, when it is discriminated that 60 seconds have elapsed, then the target 12 outputs a response REJECTED to the controller 11 in step S230 and then erases the information stored in the queue 61 in step S231.

As a result, if the controller 13 thereafter transmits a command RESERVE to the target 12 in step S232, then the target 12 stores the node ID of the controller 13 into the queue 61 in step S233. Then in step S234, the target 12 outputs a response ACCEPTED to the controller 13.

While, in the foregoing description, an IEEE 1394 high speed serial bus is used for the bus, the present invention can be applied also where any other bus is used.

The series of processes described above may be executed by hardware or by software. Where the series of processes is executed by software, a program which constructs the software is installed into a computer incorporated in the VTR 31 as hardware for exclusive use or, for example, a personal computer for universal use which can execute various functions by installing various programs.

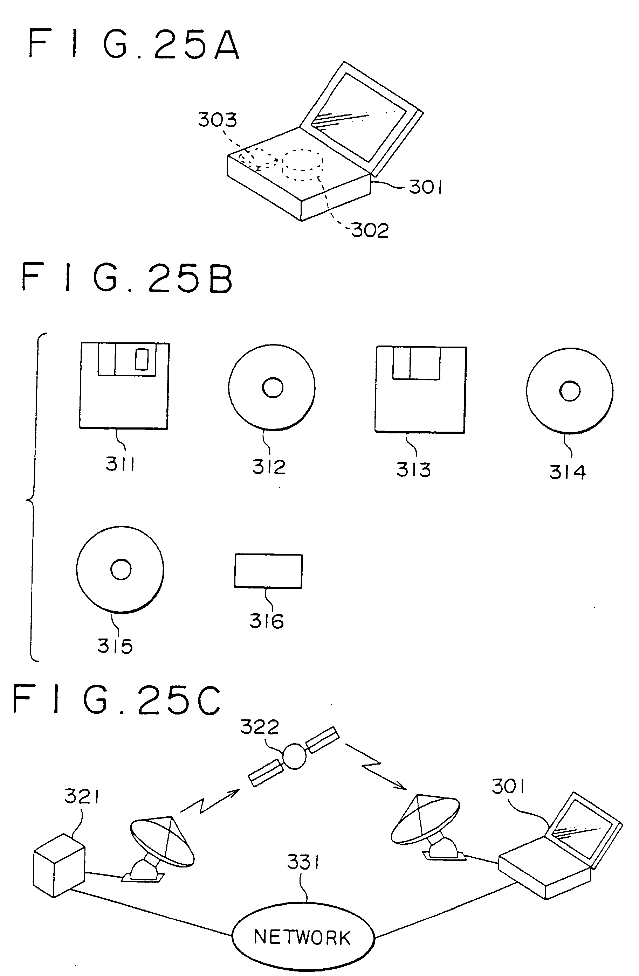

Now, a medium which is used to install the program for execution of the series of processes described above into a computer so that the program may be executed by the computer is described with reference to FIGS. 25A to 25C taking a case wherein the computer is a personal computer for universal use as an example.

In particular, the program can be provided to a user in such a form that it is installed in advance in a hard disk 302 or a semiconductor memory 303 as a recording medium built in a personal computer 301 as shown in FIG. 25A.

As an alternative, the program may be provided as package software by temporarily or permanently storing or recording it on such a recording medium as a floppy disk 311, a CD-ROM (Compact Disc-Read Only Memory) 312, an MO (Magneto-optical) disk 313, a DVD (Digital Versatile Disc) 314, a magnetic disk 315 or a semiconductor memory 316.

As another alternative, the program may be transferred by radio to the personal computer 301 from a down load site 321 through an artificial satellite 322 for digital satellite broadcasting, or may be transferred by wire to the personal computer 301 over a network 331 such as a local area network or the Internet and then installed into the built-in hard disk 302 by the computer 301.

It is to be noted that the term "medium" in the present specification is used to signify in a broad sense including all such media as mentioned hereinabove.

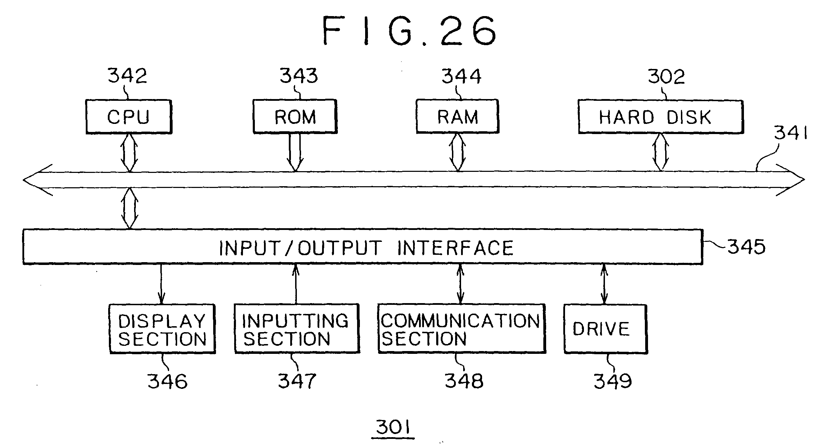

Referring to FIG. 26, for example, the personal computer 301 has a CPU (Central Processing Unit) 342 built therein. An input/output interface 345 is connected to the CPU 342 over a bus 341. If a user operates an inputting section 347 which is formed from a keyboard, a mouse or the like to input an instruction to the CPU 342 through the input/output interface 345, then the CPU 342 executes a program stored in a ROM (Read Only Memory) 343, which corresponds to the semiconductor memory 303 of FIG. 25A, in response to the instruction. Or, the CPU 342 loads into a RAM (Random Access Memory) 344 and executes a program stored in the hard disc 302 in advance, a program transferred from the satellite 322 or the network 331, received by a communication section 348 and then installed on the hard disk 302 or a program read out from the floppy disk 311, CD-ROM 312, MO disk 313, DVD 314 or magnetic disk 315 loaded on a drive 349 and installed on the hard disk 302. Further, the CPU 342 outputs, when necessary, a result of the processing, for example, to a display unit 346, which is formed from an LCD (Liquid Crystal Display) unit or the like, through the input/output interface 345.

It is to be noted that, in the present application, the steps which describe the program provided in the form of a medium may be but need not necessarily be processed in a time series in the order as described, and include processes which are executed parallelly or individually.

Further, the term "system" in the present specification is used to represent an entire apparatus which includes a plurality of apparatus.

While a preferred embodiment of the present invention has been described using specific terms, such description is for illustrative purposes only, and it is to be understood that changes and variations may be made without departing from the scope of the following claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. An information processing apparatus which communicates information over a bus, comprising:
storage means for storing, when a command regarding a state of said information processing apparatus from a second information processing apparatus connected to said information processing apparatus by said bus is accepted, information regarding the command;
detection means for detecting a state of said information processing apparatus;
outputting means for outputting, when the information regarding the command is stored in said storage means, a response corresponding to a result of the detection of said detection means;
time counting means for performing a time counting operation when the information regarding the command is stored in said storage means; and
erasure means for erasing the information regarding the command stored in said storage means when said time counting means counts a time determined in advance.

2. An information processing apparatus according to claim 1, wherein said detection means detects a change of the state of said information processing apparatus, and said outputting means outputs, when a change of the state is detected by said detection means, a response corresponding to the change of the state.

3. An information processing apparatus according to claim 1, wherein said detection means detects whether or not said information processing apparatus is in a state reserved by said second information processing apparatus.

4. An information processing apparatus according to claim 1, wherein said storage means stores identification information of said second information processing apparatus from which the command regarding the state has been transmitted over said bus.

5. An information processing apparatus according to claim 1, wherein said storage means stores it itself that the command regarding the state is accepted.

6. An information processing apparatus according to claim 5, wherein said outputting means outputs a response corresponding to a result of the detection of said detection means without specifying said second information processing apparatus from which the command regarding the state has been transmitted.

7. An information processing apparatus according to claim 1, further comprising control means for controlling a kind of the command regarding the state to be stored into said storage means in response to a result of the detection of said detection means.

8. An information processing method for an information processing apparatus which communicates information over a bus, comprising:
a storage step of storing, when a command regarding a state of said information processing apparatus from a second information processing apparatus connected to said information processing apparatus by said bus is accepted by said information processing apparatus, information regarding the command;
a detection step of detecting a state of said information processing apparatus;
an outputting step of outputting, when the information regarding the command is stored, a response corresponding to a result of the detection by the processing of the detection step;
a time counting step of performing a time counting operation when the information regarding the command is stored; and
an erasure step of erasing the information regarding the command stored by the processing of the storage step when a time determined in advance is counted by the processing of the time counting step.

9. A medium for causing a computer to execute a program for information processing of an information processing apparatus which communicates information over a bus, the program including:
a storage step of storing, when a command regarding a state of said information processing apparatus from a second information processing apparatus connected to said information processing apparatus by said bus is accepted by said information processing apparatus, information regarding the command;
a detection step of detecting a state of said information processing apparatus;
an outputting step of outputting, when the information regarding the command is stored, a response corresponding to a result of the detection by the processing of the detection step;
a time counting step of performing a time counting operation when the information regarding the command is stored; and
an erasure step of erasing the information regarding the command stored by the processing of the storage step when a time determined in advance is counted by the processing of the time counting step.

10. An information processing apparatus which communicates information over a bus, comprising:
outputting means for outputting a command regarding a state of a second information processing apparatus connected to said information processing apparatus by said bus;
fetching means for fetching a response outputted from said second information processing apparatus in response to the command outputted from said outputting means;
time counting means for performing a time counting operation when said outputting means outputs the command; and
control means for controlling, when said time counting means counts a time determined in advance, said outputting means to output the command again.

11. An information processing apparatus according to claim 10, wherein the time to be counted by said time counting means is shorter than a time for which said second information apparatus holds, when said second information apparatus accepts the command, the information regarding the command.

12. An information processing apparatus according to claim 11, further comprising designation means for designating, as a format of a response to be outputted from said second information processing apparatus, a format in which no information processing apparatus is specified as a destination of the response.

13. An information processing apparatus according to claim 11, further comprising designation means for designating, as a format of a response to be outputted from said second information processing apparatus, one of a first format in which an information processing apparatus is specified as a destination of the response and a second format in which no information processing apparatus is specified as a destination of the response.

14. An information processing apparatus according to claim 13, wherein said time counting means performs the time counting operation only when a predetermined one of the first and second formats is designated by said designation means.

15. An information processing method for an information processing apparatus which communicates information over a bus, comprising:
an outputting step of outputting a command regarding a state of a second information processing apparatus connected to said information processing apparatus by said bus;
a fetching step of fetching a response outputted from said second information processing apparatus in response to the command outputted by the processing of the outputting step;
a time counting step of performing a time counting operation when the command is outputted by the processing of the outputting step; and
a control step of controlling, when a time determined in advance is counted by the processing of the time counting step, the processing in the outputting step to output the command again.

16. A medium for causing a computer to execute a program for information processing of an information processing apparatus which communicates information over a bus, the program including:
an outputting step of outputting a command regarding a state of a second information processing apparatus connected to said information processing apparatus by said bus;
a fetching step of fetching a response outputted from said second information processing apparatus in response to the command outputted by the processing of the outputting step;
a time counting step of performing a time counting operation when the command is outputted by the processing of the outputting step; and
a control step of controlling, when a time determined in advance is counted by the processing of the time counting step, the processing in the outputting step to output the command again.

17. An information processing apparatus which communicates information over a bus, comprising:
first outputting means for outputting a command regarding a state of a second information processing apparatus connected to said information processing apparatus by said bus;
fetching means for fetching a response outputted from said second information processing apparatus in response to the command outputted from said first outputting means;
first time counting means for performing a time counting operation when said first outputting means outputs the command;
control means for controlling, when said first time counting means counts a time determined in advance, said first outputting means to output the command again;
storage means for storing, when a command regarding a state of said information processing apparatus from said second information processing apparatus is accepted, information regarding the command;
detection means for detecting a state of said information processing apparatus;
second outputting means for outputting, when the information regarding the command is stored in said storage means, a response corresponding to a result of the detection of said detection means;
second time counting means for performing a time counting operation when the information regarding the command is stored in said storage means; and
erasure means for erasing the information regarding the command stored in said storage means when said second time counting means counts a time determined in advance.

18. An information processing apparatus according to claim 17, further comprising control means for controlling a kind of the command regarding the state to be stored into said storage means in response to a result of the detection of said detection means.

19. An information processing method for an information processing apparatus which communicates information over a bus, comprising:
a first outputting step of outputting a command regarding a state of a second information processing apparatus connected to said information processing apparatus by said bus;
a fetching step of fetching a response outputted from said second information processing apparatus in response to the command outputted by the processing of the first outputting step;
a first time counting step of performing a time counting operation when the command is outputted by the processing of the first outputting step;
a control step of controlling, when a time determined in advance is counted by the processing of the first time counting step, the processing of the first outputting step to output the command again;
a storage step of storing, when a command regarding a state of said information processing apparatus from said second information processing apparatus is accepted, information regarding the command;
a detection step of detecting a state of said information processing apparatus;
a second outputting step of outputting, when the information regarding the command is stored, a response corresponding to a result of the detection by the detection step;
a second time counting step of performing a time counting operation when the information regarding the command is stored; and
an erasure step of erasing the information regarding the command stored by the processing of the storage step when the second time counting step counts a time determined in advance.

20. A medium for causing a computer to execute a program for information processing of an information processing apparatus which communicates information over a bus, the program including:
a first outputting step of outputting a command regarding a state of a second information processing apparatus connected to said information processing apparatus by said bus;
a fetching step of fetching a response outputted from said second information processing apparatus in response to the command outputted by the processing of the first outputting step;
a first time counting step of performing a time counting operation when the command is outputted by the processing of the first outputting step;
a control step of controlling, when a time determined in advance is counted by the processing of the first time counting step, the processing of the first outputting step to output the command again;
a storage step of storing, when a command regarding a state of said information processing apparatus from said second information processing apparatus is accepted, information regarding the command;
a detection step of detecting a state of said information processing apparatus;
a second outputting step of outputting, when the information regarding the command is stored, a response corresponding to a result of the detection by the detection step;
a second time counting step of performing a time counting operation when the information regarding the command is stored; and
an erasure step of erasing the information regarding the command stored by the processing of the storage step when the second time counting step counts a time determined in advance.

21. An information processing apparatus which communicates information over a bus, comprising:
outputting means for outputting a command regarding a state of a second information processing apparatus connected to said information processing apparatus by said bus;
designation means for designating, as a format of a response to be outputted from said second information processing apparatus, a format in which no information processing apparatus is specified as a destination of the response in response to the command outputted from said outputting means; and
fetching means for fetching a response outputted from said second information processing apparatus.

22. An information processing apparatus according to claim 21, wherein said designation means selectively designates, as a format of a response to be outputted from said second information processing apparatus, one of a first format in which an information processing apparatus is specified as a destination of the response and a second format in which no information processing apparatus is specified as a destination of the response.

23. An information processing method for an information processing apparatus which communicates information over a bus, comprising:
an outputting step of outputting a command regarding a state of a second information processing apparatus connected to said information processing apparatus by said bus;
a designation step of designating, as a format of a response to be outputted from said second information processing apparatus, a format in which no information processing apparatus is specified as a destination of the response in response to the command outputted by the processing of the outputting step; and
a fetching step of fetching a response outputted from said second information processing apparatus.

24. A medium for causing a computer to execute a program for information processing of an information processing apparatus which communicates information over a bus, the program including:
an outputting step of outputting a command regarding a state of a second information processing apparatus connected to said information processing apparatus by said bus;
a designation step of designating, as a format of a response to be outputted from said second information processing apparatus, a format in which no information processing apparatus is specified as a destination of the response in response to the command outputted by the processing of the outputting step; and
a fetching step of fetching a response outputted from said second information processing apparatus.

25. An information processing apparatus which communicates information over a bus, comprising:
storage means for storing, when a command regarding a state of said information processing apparatus from a second information processing apparatus connected to said information processing apparatus by said bus is accepted, information regarding the command;
detection means for detecting a state of said information processing apparatus;
outputting means for outputting, when the information regarding the command is stored in said storage means, a response corresponding to a result of the detection of said detection means; and
designation means for designating, as a format of a response to be outputted from said outputting means, a format in which no information processing apparatus is specified as a destination of the response.

26. An information processing apparatus according to claim 25, wherein said designation means selectively designates, as the format of the response to be outputted from said outputting means, one of a first format in which an information processing apparatus is designated as a destination of the response and a second format in which no information processing apparatus is designated as a destination of the response.

27. An information processing apparatus according to claim 25, wherein said detection means detects a change of the state of said information processing apparatus, and said outputting means outputs, when a change of the state is detected by said detection means, a response corresponding to the change of the state.

28. An information processing apparatus according to claim 25, wherein said detection means detects whether or not said information processing apparatus is in a state reserved by said second information processing apparatus.

29. An information processing method for an information processing apparatus which communicates information over a bus, comprising:
a storage step of storing, when a command regarding a state of said information processing apparatus from a second information processing apparatus connected to said information processing apparatus by said bus is accepted, information regarding the command;
a detection step of detecting a state of said information processing apparatus;
an outputting step of outputting, when the information regarding the command is stored, a response corresponding to a result of the detection by the processing of the detection step; and
a designation step of designating, as a format of a response to be outputted by the processing of the outputting step, a format in which no information processing apparatus is specified as a destination of the response.

30. A medium for causing a computer to execute a program for information processing of an information processing apparatus which communicates information over a bus, the program including:
a storage step of storing, when a command regarding a state of said information processing apparatus from a second information processing apparatus connected to said information processing apparatus by said bus is accepted, information regarding the command;
a detection step of detecting a state of said information processing apparatus;
an outputting step of outputting, when the information regarding the command is stored, a response corresponding to a result of the detection by the processing of the detection step; and
a designation step of designating, as a format of a response to be outputted by the processing of the outputting step, a format in which no information processing apparatus is specified as a destination of the response.

31. An information processing apparatus which communicates information over a bus, comprising:
first outputting means for outputting a command regarding a state of a second information processing apparatus connected to said information processing apparatus by said bus;
first designation means for designating, as a format of a response to be outputted from said second information processing apparatus, a format in which no information processing apparatus is specified as a destination of the response in response to the command outputted from said first outputting means;
fetching means for fetching a response outputted from said second information processing apparatus;
storage means for storing, when a command regarding a state of said information processing apparatus from a second information processing apparatus connected to said information processing apparatus by said bus is accepted, information regarding the command;
detection means for detecting a state of said information processing apparatus;
second outputting means for outputting, when the information regarding the command is stored in said storage means, a response corresponding to a result of the detection of said detection means; and
second designation means for designating, as a format of a response to be outputted from said second outputting means, a format in which no information processing apparatus is specified as a destination of the response.

32. An information processing apparatus according to claim 31, further comprising control means for controlling a kind of the command regarding the state to be stored into said storage means in response to a result of the detection of said detection means.

33. An information processing method for an information processing apparatus which communicates information over a bus, comprising:
a first outputting step of outputting a command regarding a state of a second information processing apparatus connected to said information processing apparatus by said bus;
a first designation step of designating, as a format of a response to be outputted from said second information processing apparatus, a format in which no information processing apparatus is specified as a destination of the response in response to the command outputted by the processing of the first outputting step;
a fetching step of fetching a response outputted from said second information processing apparatus;
a storage step of storing, when a command regarding a state of said information processing apparatus from said second information processing apparatus is accepted, information regarding the command;
a detection step of detecting a state of said information processing apparatus;
a second outputting step of outputting, when the information regarding the command is stored, a response corresponding to a result of the detection of the detection step; and
a second designation step of designating, as a format of a response to be outputted by the processing of the second outputting step, a format in which no information processing apparatus is specified as a destination of the response.

34. A medium for causing a computer to execute a program for information processing of an information processing apparatus which communicates information over a bus, the program including:
a first outputting step of outputting a command regarding a state of a second information processing apparatus connected to said information processing apparatus by said bus;
a first designation step of designating, as a format of a response to be outputted from said second information processing apparatus, a format in which no information processing apparatus is specified as a destination of the response in response to the command outputted by the processing of the first outputting step;
a fetching step of fetching a response outputted from said second information processing apparatus;
a storage step of storing, when a command regarding a state of said information processing apparatus from said second information processing apparatus is accepted, information regarding the command;
a detection step of detecting a state of said information processing apparatus;
a second outputting step of outputting, when the information regarding the command is stored, a response corresponding to a result of the detection of the detection step; and
a second designation step of designating, as a format of a response to be outputted by the processing of the second outputting step, a format in which no information processing apparatus is specified as a destination of the response.

35. An information processing apparatus which communicates information over a bus, comprising:
first outputting means for outputting a command regarding a state of a second information processing apparatus connected to said information processing apparatus by said bus;
fetching means for fetching a response outputted from said second information processing apparatus in response to the command outputted from said first outputting means;
first time counting means for performing a time counting operation when said first outputting means outputs the command;
first control means for controlling, when said first time counting means counts a time determined in advance, said first outputting means to output the command again;
storage means for storing, when a command regarding a state of said information processing apparatus from said second information processing apparatus is accepted, information regarding the command;
detection means for detecting a state of said information processing apparatus;
second outputting means for outputting, when the information regarding the command is stored in said storage means, a response corresponding to a result of the detection of said detection means;
second time counting means for performing a time counting operation when the information regarding the command is stored in said storage means;
erasure means for erasing the information regarding the command stored in said storage means when said second time counting means counts a time determined in advance;
first designation means for designating, as a format of a response to be outputted from said second information processing apparatus, a format in which no information processing apparatus is specified as a destination of the response in response to the command outputted from said first outputting means; and
second designation means for designating, as a format of a response to be outputted from said second outputting means, a format in which no information processing apparatus is specified as a destination of the response.

36. An information processing apparatus according to claim 35, further comprising second control means for controlling a kind of the command regarding the state to be stored into said storage means in response to a result of the detection of said detection means.

37. An information processing method for an information processing apparatus which communicates information over a bus, comprising:
a first outputting step of outputting a command regarding a state of a second information processing apparatus connected to said information processing apparatus by said bus;
a fetching step of fetching a response outputted from said second information processing apparatus in response to the command outputted by the processing of the first outputting step;
a first time counting step of performing a time counting operation when the command is outputted by the processing of the first outputting step;
a control step of controlling, when a time determined in advance is counted by the processing of the first time counting step, the processing of the first outputting step to output the command again;
a storage step of storing, when a command regarding a state of said information processing apparatus from said second information processing apparatus is accepted, information regarding the command;
a detection step of detecting a state of said information processing apparatus;
a second outputting step of outputting, when the information regarding the command is stored, a response corresponding to a result of the detection by the processing of the detection step;
a second time counting step of performing a time counting operation when the information regarding the command is stored;
an erasure step of erasing the information regarding the command stored by the processing of the storage step when a time determined in advance is counted by the processing of the second time counting step;
a first designation step of designating, as a format of a response to be outputted from said second information processing apparatus, a format in which no information processing apparatus is specified as a destination of the response in response to the command outputted by the processing of the first outputting step; and
a second designation step of designating, as a format of a response to be outputted by the processing of the second outputting step, a format in which no information processing apparatus is specified as a destination of the response.

38. A medium for causing a computer to execute a program for information processing of an information processing apparatus which communicates information over a bus, the program including:
a first outputting step of outputting a command regarding a state of a second information processing apparatus connected to said information processing apparatus by said bus;
a fetching step of fetching a response outputted from said second information processing apparatus in response to the command outputted by the processing of the first outputting step;
a first time counting step of performing a time counting operation when the command is outputted by the processing of the first outputting step;
a control step of controlling, when a time determined in advance is counted by the processing of the first time counting step, the processing of the first outputting step to output the command again;
a storage step of storing, when a command regarding a state of said information processing apparatus from said second information processing apparatus is accepted, information regarding the command;
a detection step of detecting a state of said information processing apparatus;
a second outputting step of outputting, when the information regarding the command is stored, a response corresponding to a result of the detection by the processing of the detection step;
a second time counting step of performing a time counting operation when the information regarding the command is stored;
an erasure step of erasing the information regarding the command stored by the processing of the storage step when a time determined in advance is counted by the processing of the second time counting step;
a first designation step of designating, as a format of a response to be outputted from said second information processing apparatus, a format in which no information processing apparatus is specified as a destination of the response in response to the command outputted by the processing of the first outputting step; and
a second designation step of designating, as a format of a response to be outputted by the processing of the second outputting step, a format in which no information processing apparatus is specified as a destination of the response.

39. An information processing apparatus which communicates information over a bus, comprising:
storage means for storing, when a command regarding a state of said information processing apparatus from a second information processing apparatus connected to said information processing apparatus by said bus is accepted, information regarding the command;
detection means for detecting a state of said information processing apparatus;
outputting means for outputting, when the information regarding the command is stored in said storage means, a response corresponding to a result of the detection of said detection means; and
control means for controlling a kind of the command regarding the state to be stored into said storage means in response to a result of the detection of said detection means.

40. An information processing method for an information processing apparatus which communicates information over a bus, comprising:
a storage step of storing, when a command regarding a state of said information processing apparatus from a second information processing apparatus connected to said information processing apparatus by said bus is accepted, information regarding the command;
a detection step of detecting a state of said information processing apparatus;
an outputting step of outputting, when the information regarding the command is stored, a response corresponding to a result of the detection by the processing of the detection step; and
a control step of controlling a kind of the command regarding the state to be stored by the processing of the storage step in response to a result of the detection by the processing of the detection step.

41. A medium for causing a computer to execute a program for information processing of an information processing apparatus which communicates information over a bus, the program including:
a storage step of storing, when a command regarding a state of said information processing apparatus from a second information processing apparatus connected to said information processing apparatus by said bus is accepted, information regarding the command;
a detection step of detecting a state of said information processing apparatus;
an outputting step of outputting, when the information regarding the command is stored, a response corresponding to a result of the detection by the processing of the detection step; and
a control step of controlling a kind of the command regarding the state to be stored by the processing of the storage step in response to a result of the detection by the processing of the detection step.
